(19) **Europäisches Patentamt / European Patent Office / Office européen des brevets**

(11) **EP 3 340 092 A1**

(12) # EUROPEAN PATENT APPLICATION
published in accordance with Art. 153(4) EPC

(43) Date of publication:
**27.06.2018 Bulletin 2018/26**

(21) Application number: **16836685.4**

(22) Date of filing: **22.08.2016**

(51) Int Cl.:
***G06F 19/00*** (2018.01)

(86) International application number:
**PCT/CN2016/096222**

(87) International publication number:
**WO 2017/028821 (23.02.2017 Gazette 2017/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: 20.08.2015  CN 201510516229
18.04.2016  CN 201610241057
05.05.2016  CN 201610293450
19.05.2016  CN 201610340879

(71) Applicant: **Beijing Didi Infinity Technology and Development Co., Ltd.**
**Beijing 100193 (CN)**

(72) Inventors:
• **ZHANG, Lingyu**
  **Beijing 100193 (CN)**
• **LI, Xihua**
  **Beijing 100193 (CN)**
• **DING, Fan**
  **Beijing 100094 (CN)**

(74) Representative: **Gosnall, Toby**
**Barker Brettell LLP**
**100 Hagley Road**
**Edgbaston**
**Birmingham**
**B16 8QQ (GB)**

(54) **METHOD AND SYSTEM FOR PREDICTING CURRENT ORDER INFORMATION ON THE BASIS OF HISTORICAL ORDER**

(57)    The present disclosure relates to systems and methods for determining information related to a current order. The methods may include: establishing a connection between a server and a user device; obtaining, by the server, the current order from the user device, wherein the current order may include a current time and a current location of the user device, the current order including an intention of the user device for requesting a service; determining, by the server, a user profile associated with the user device; and determining, by the server, information related to the current order based on the user profile and the current order.

**FIG. 1**

**Description**

**CROSS-REFERENCE TO RELATED APPLICATIONS**

This application claims priority to Chinese Patent Application No. 201510516229.5, filed on August 20, 2015, Chinese Patent Application No. 201610241057.X, filed on April 18, 2016, Chinese Patent Application No. 201610293450.3, filed on May 5, 2016, and Chinese Patent Application No. CN 201610340879.3, filed on May 19, 2016, the entire contents of which are hereby incorporated by reference.

**TECHNICAL FIELD**

The present disclosure generally relates to systems and methods for determining information related to a current order, and in particular, to systems and methods for determining information related to a current order based on a user profile, in an on-demand service.

**BACKGROUND**

Currently, on-demand services are becoming more and more popular. Recognizing a user or a user group accurately and predicting transportation patterns of the user or the user group accurately are significant for promoting and developing commercial products and services in on-demand transportation services. For example, user profiles of a user or a user group may be determined to outline a user, associate with user needs and predict a user behavior, and different users or user groups may be targeted accurately. As another example, information (e.g., a current destination, a current transportation means, etc.) related to a current order of a user may be determined to serve a user better and to enhance his/her user experience. Therefore, methods and systems for determining information related to a current order are needed.

**SUMMARY**

According to an aspect of the present disclosure, a system is provided. The system may include one processor and one computer readable storage medium. The computer readable storage medium may be configured to store instructions that, when executed by the processor, causing the processor to: establish a connection with a user device; obtain a current order from the user device, wherein the current order includes a current time and a current location of the user device, the current order including an intention of the user device for requesting a service; determine a user profile associated with the user device; and determine information related to the current order based on the user profile and the current order.

According to an aspect of the present disclosure, a method is provided. The method may be associated with systems and methods for determining information related to a current order in the present disclosure. The method may include the following steps: establishing a connection between a server and a user device; obtaining, by the server, the current order from the user device, wherein the current order may include a current time and a current location of the user device, the current order including an intention of the user device for requesting a service; determining, by the server, a user profile associated with the user device; and determining, by the server, information related to the current order based on the user profile and the current order.

Additional features will be set forth in part in the description which follows, and in part will become apparent to those skilled in the art upon examination of the following and the accompanying drawings or may be learned by production or operation of the examples. The features of the present disclosure may be realized and attained by practice or use of various aspects of the methodologies, instrumentalities and combinations set forth in the detailed examples discussed below.

**BRIEF DESCRIPTION OF THE DRAWINGS**

The present disclosure is further described in terms of exemplary embodiments. These exemplary embodiments are described in detail with reference to the drawings. These embodiments are non-limiting exemplary embodiments, in which like reference numerals represent similar structures throughout the several views of the drawings, and wherein:

FIG. 1 is a schematic diagram of an exemplary network environment of a transportation service system according to some embodiments of the present disclosure;
FIG. 2 is a structure diagram illustrating an exemplary server and/or user device according to some embodiments of the present disclosure;

FIG. 3 is a block diagram illustrating an exemplary processor according to some embodiments of the present disclosure;

FIG. 4 is a block diagram illustrating an exemplary network interface according to some embodiments of the present disclosure;

FIG. 5 is a flowchart illustrating an exemplary process for determining information related to a current order according to some embodiments of the present disclosure;

FIG. 6 is a flowchart illustrating an exemplary process for determining a user profile associated with the user device according to some embodiments of the present disclosure;

FIG. 7 is a flowchart illustrating an exemplary process for obtaining a user profile according to some embodiments of the present disclosure;

FIG. 8 is a flowchart illustrating an exemplary process for obtaining a user profile according to some embodiments of the present disclosure;

FIG. 9 is a flowchart illustrating an exemplary process for determining a frequently stayed location according to some embodiments of the present disclosure;

FIG. 10 is a flowchart illustrating an exemplary process for determining a frequently stayed location according to some embodiments of the present disclosure;

FIG. 11 is a flowchart illustrating an exemplary process for determining a frequently stayed location according to some embodiments of the present disclosure;

FIG. 12 is a flowchart illustrating an exemplary process for determining a frequently stayed location according to some embodiments of the present disclosure;

FIG. 13 is a flowchart illustrating an exemplary process for determining a frequently stayed location according to some embodiments of the present disclosure;

FIG. 14 is a flowchart illustrating an exemplary process for determining a transportation means according to some embodiments of the present disclosure;

FIG. 15 is a flowchart illustrating an exemplary process for determining one or more probabilities that the user selects one or more transportation means according to some embodiments of the present disclosure;

FIG. 16 is a flowchart illustrating an exemplary process for determining one or more order completion probabilities of the current order for one or more transportation means according to some embodiments of the present disclosure;

FIG. 17 is a flowchart illustrating an exemplary process for determining a recommended destination of the current order according to some embodiments of the present disclosure;

FIG. 18 is another flowchart illustrating an exemplary process for determining a current destination of the user device by the server according to some embodiments of the present disclosure;

FIG. 19 is a flowchart illustrating an exemplary process for determining a destination distribution model by the server according to some embodiments of the present disclosure;

FIG. 20A and FIG. 20B illustrates schematic diagrams of distribution data for destination information according to some embodiments of the present disclosure;

FIG 21A illustrates a schematic diagram of vectorized ordering times according to some embodiments of the present disclosure; and

FIG 21B illustrates a schematic diagram of a vector conversion of the ordering times according to some embodiments of the present disclosure.

## DETAILED DESCRIPTION

In order to illustrate the technical solutions related to the embodiments of the present disclosure, brief introduction of the drawings referred to in the description of the embodiments is provided below. Obviously, drawings described below are only some embodiments of the present disclosure. Those having ordinary skills in the art, without further creative efforts, may apply the present disclosure to other similar scenarios according to these drawings. Unless stated otherwise or obvious from the context, the same reference numeral in the drawings refers to the same structure and operation.

As used in the disclosure and the appended claims, the singular forms "a," "an," and "the" include plural referents unless the content clearly dictates otherwise. It will be further understood that the terms "comprises," "comprising," "includes," and/or "including" when used in the disclosure, specify the presence of stated steps and elements, but do not preclude the presence or addition of one or more other steps and elements.

As shown in the present disclosure and in the claims, terms such as "system", "module", and/or "unit" are used only to indicate a hierarchical relationship in structures and don't have definite meanings. It should be understood that these terms may be used interchageably, or replaced by other words.

Although the present disclosure makes various references to certain modules in the system according to some embodiments of the present disclosure, any number of different modules may be used and run on a client terminal and/or a server. The modules are illustrative only, and different aspects of the systems and methods may use different modules, or units.

The term "module" and/or "unit" in the present disclosure refers to a logic or a set of software instructions stored in hardware or firmware. The "modules" and/or "units" can be executed by software and/or hardware modules, or stored in any computer-readable, non-temporary media or other storage devices. In some embodiments, a software module may be compiled and connected to an executable program. The software module may respond to information transmitted by itself or other modules and/or may respond when certain events are detected or interrupted. A software module capable of operating on a computing device (e.g., processor 210) may be provided on a computer readable medium (e.g., storage 220), and the computer readable medium may be a disk, a digital disk, a flash disk, a magnetic disk, or any other kind of tangible medium; a software module may be obtained through a digital download manner (the digital download may also include data stored in a compressed package or an installation package, which needs to be decompressed or decoded before execution). The software code may be partly or completely stored in a storage device of the computing device executing the operation and be applied to the operation of the computing device. Software instructions may be embedded in firmware, for example, an erasable programmable read only memory (EPROM). Obviously, the hardware module may include connected logic units, for example, a gate, a trigger, and/or may include programmable units, for example, a programmable gate array or processor. Functions of the modules or computing devices described herein may be preferably implemented as software modules, but may be represented in hardware or firmware. In general, the module referred herein is a logic module and not limited by a specific physical form or memory constraints. A module and/or unit may be combined with other modules and/or units, or divided into a series of sub-modules and/or sub-units.

Flowcharts are used in the present disclosure to illustrate operations performed by the system according to some embodiments of the present disclosure. It should be understood that the preceding or following operations may not be necessarily performed exactly in order. Instead, various steps may be processed in reverse sequence or simultaneously. Moreover, other operations may be added into these procedures, or one or more steps may be removed from these procedures.

Some embodiments of the present disclosure may be applied to different transportation systems which may include, but are not limited to one or more of terrestrial transportations, marine transportations, air transportations, space transportations, or the like, or any combination thereof. For example, transportation system of taxi, special car, hitchhiking, bus, train, bullet train, high-speed rail, metro, watercraft, airplane, airship, fire balloon, unpiloted vehicle, express receiving/sending, or the like, uses management and/or allocation method. Application scenarios of different embodiments of the present disclosure may include, but are not limited to, one or more of web pages, browser plug-ins, clients, custom systems, enterprise analysis systems, artificial intelligence robots, or the like, or any combination thereof. It should be understood that application scenarios of the system and method disclosed herein are only some examples or embodiments. Those having ordinary skills in the art, without further creative efforts, may apply these drawings to other application scenarios. For example, other similar service systems.

The terms "user", "passenger", "driver", "customer", "demander", "provider", "supplier", "use demander", "service requester", "service requesting side", "consumer", "consumption side", "service provider", "service providing side", "server", "serving side" or the like described in the present disclosure are interchangeable and refer to a party that needs or subscribes to a service and/or provides a service or assists in providing a service, being either a person or a tool. The "user" described in the present disclosure may be a party that needs or subscribes to a service, or may be a party that provides a service or assists in providing a service. For example, a user may refer to any one or both of a driver and a passenger. The "service request", "car hailing request" and "order" described in the present disclosure are interchangeable. A party that needs or requests a service may act as an initiator of a service request, or a party that provides a service or assists in providing a service may act as an initiator of a service request. Similarly, a service request may be initiated by the party that needs or requests a service or by the party that provides a service or assists in providing a service. A "service request" may be a service request approved by both a consumer and a service provider, or a service request only approved by one of the service provider and the consumer. A "service request" may be a charged service request, or a free service request.

The positioning technology used in the present disclosure may include a global positioning system (GPS), a global navigation satellite system (GLONASS), a compass navigation system (COMPASS), a Galileo positioning system, a quasi-zenith satellite system (QZSS), base station positioning and a Wi-Fi positioning technology, or the like, or any combination thereof. Although in some embodiments, the use of GPS positioning techniques (e.g., GPS modules, GPS coordinates, or positioning data points) is illustrated, it will be appreciated that other positioning techniques may be selected.

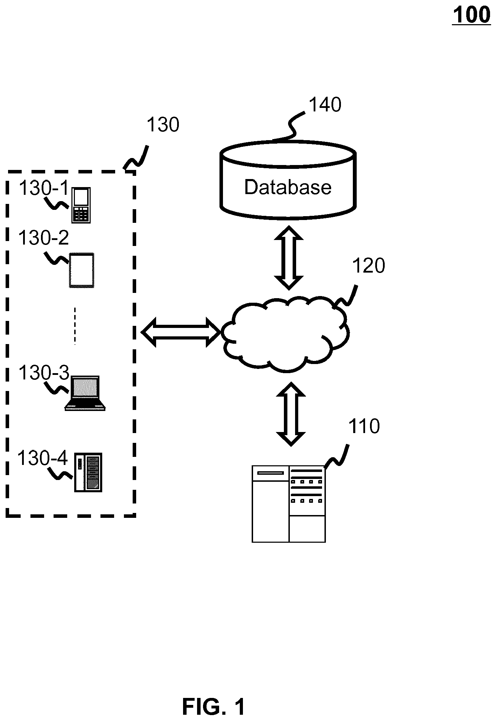

FIG. 1 is a schematic diagram of an exemplary network environment 100 of a transportation service system according to some embodiments of the present disclosure. The transportation service system may include a transportation service server 110 (referred to as "server 110"), a network 120, a user device 130, and a database 140. In some embodiments, the server 110 may obtain a current order from the user device 130, determine a user profile associated with the user device, and determine information related to the current order according to the user profile. In some embodiments, the server 110 may obtain one or more historical orders associated with the user device 130 in a preset time period, and determine a user profile associated with the user device based on the one or more historical orders.

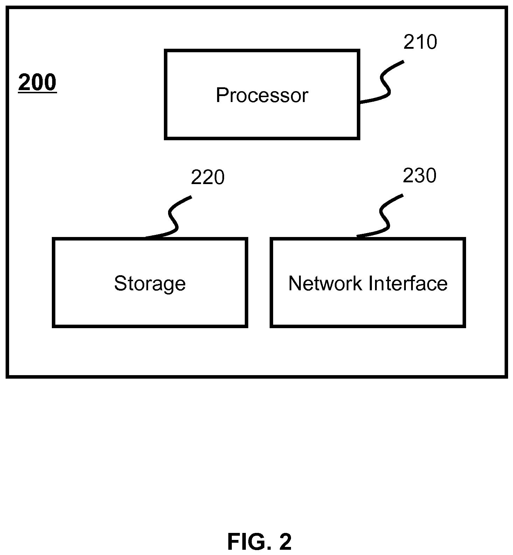

In some embodiments, the server 110 may be a server, or a server group. The server group may be centralized, for example, the server group may be a data center. The server group may be distributed, for example, the server group may be a distributed system. The server 110 may be local or remote. For example, the server 110 may access information stored in the user device 130 and/or the database 140 via the network 120. As another example, the server 110 may be directly connected to the user device 130 and/or the database 140 to access the information stored in the user device 130 and/or the database 140. In some embodiments, the server 110 may be a cloud platform. For example, the cloud platform may include a public cloud, a private cloud, a community cloud, a hybrid cloud, or the like, or any combination thereof. In some embodiments, the server 110 may be a computing platform having one or more components illustrated in FIG. 2.

The network 120 may be a channel for providing information exchange. For example, the server 110, the user device 130, and the database 140 may exchange information via the network 120. In some embodiments, the network 120 may be a single network, or a combination of multiple networks. For example, the network 120 may include a local area network, a wide area network, a public network, a private network, a wireless local area network, a virtual network, a metropolitan area network, a public switched telephone network, a Bluetooth network and a near field communication network, or the like, or any combination thereof. The network 120 may include a plurality of network access points, for example, a wired or wireless access point, a base station or a network exchange point, via which the server 110, the user device 130, and the database 140 may connect to the network 120 and receive and transmit information via the network 120.

The "user" described in the present disclosure may be a party that needs or subscribes to a service request (e.g., a passenger), or may be a party that provides a service or assists in providing a service (e.g., a driver). In the present disclosure, "user" and "user device" may be used interchangeably. The user may also include a person who uses the user device 130. In some embodiments, the person may not be the user himself. For example, a person A who uses the user device 130 may use the user device 130 to transmit a service request, or receive a service, other information or instructions transmitted by the server 110 for a user B. For brevity, the person who uses the user device 130 may be referred to simply as a user in the present disclosure.

In some embodiments, the user device 130 may include a mobile device 130-1, a tablet computer 130-2, a laptop computer 130-3, and a vehicle built-in device 130-4, or the like, or any combination thereof. The mobile device 130-1 may include a smart home device, a wearable device, an intelligent mobile device, a virtual reality device, an augmented reality device, or the like, or any combination thereof. The smart home device may include a smart lighting device, a control device of an intelligent electrical apparatus, a smart monitoring device, a smart television, a smart video camera, an interphone, or the like, or any combination thereof. The wearable device may include a smart bracelet, smart footgear, smart eyeglasses, a smart helmet, a smart headband, smart clothing, a smart backpack, a smart accessory, or the like, or any combination thereof. The intelligent mobile device may include a smart phone, a personal digital assistance (PDA), a smart watch, a laptop computer, a tablet computer, a vehicle built-in device (a carputer, an on-board television, etc.), a game device, navigation device, a point of sale (POS) device, or the like, or any combination thereof. The virtual reality device and/or the augmented reality device may include a virtual reality helmet, a virtual reality glasses, a virtual reality patch, an augmented reality helmet, an augmented reality glasses, an augmented reality patch, or the like, or any combination thereof. For example, Google Glass, Oculus Rift, Hololens, Gear VR, etc. The vehicle built-in device 130-4 may be a carputer or the like. In some embodiments, the user device 130 may be a device with a positioning function for positioning a location of a user or the user device 130. In some embodiments, the user device 130 may communicate with other pointing devices to perform positioning. In some embodiments, the user device 130 may transmit positioning information to the server 110.

In some embodiments, the database 140 may generally refer to a device with a storage function. The database 140 may store data collected from the user device 130. The database 140 may store various data generated during an operation of the server 110. The database 140 may be local or remote. The database 140 may include a hierarchical database, a networked database, a relational database, or the like, or any combination thereof. The database 140 may digitize information and then store the information using electronic, magnetic, or optical storage devices. The database 140 may store a plurality of information, such as a program, data. The database 140 may be a device that stores information by means of electrical energy, for example, a random access memory (RAM), a read only memory (ROM), etc. The random access memory may include a decimal count tube, a selectron tube, a delay line memory, a Williams tube, a dynamic random access memory (DRAM), a static random access memory (SRAM), a thyristor random access memory (T-RAM), a zero-capacitor random access memory (Z-RAM), or the like, or a combination thereof. The read only memory may include a magnetic bubble memory, a magnetic twistor memory, a thin-film memory, a magnetic plated wire memory, a magnetic core memory, a magnetic drum memory, an optical disk drive, a hard disk, a tape, a non-volatile random access memory (NVRAM), a phase change memory, a magnetic resistive random access memory, a ferroelectric random access memory, a non-volatile SRAM, a flash memory, an electrically erasable programmable read-only memory, an erasable programmable read-only memory, a programmable read-only memory, a mask ROM, a floating connection gate random access memory, a nano random access memory, a racetrack memory, a resistive random access memory, a programmable metallization cell, or the like, or any combination thereof. The database 140 may be a device that stores information by means of magnetic energy, for example, a hard disk, a floppy disk, a tape, a magnetic core memory, a magnetic bubble memory, a USB flash disk, and a flash memory. The database 140 may be a device that stores information by means of optical manners, for example, a CD or DVD. The database 140 may be a device that stores information by means of magneto-optical manners, for example, a magneto-optical disk. An access manner of the database 140 may be a random storage, a serial access storage, a read-only storage, or the like, or any combination thereof. The database 140 may be a non-permanent memory or a permanent memory. The above-mentioned storage devices are examples only, and storage devices that may be used in the system are not limited thereto. In some embodiments, the database 140 may be a cloud computing platform with a data storage function, and may include a public cloud, a private cloud, a community cloud, a hybrid clouds, etc.

The database 140 may be interconnected or communicated with the network 120, or may be interconnected or communicated directly with the server 110 or a part thereof. In some embodiments, the database 140 may be provided at the background of the server 110. In some embodiments, the database 140 may be independent and directly connected to the network 120. When the database 140 is interconnected or communicated with the network 120, the user device 130 may access information in the database 140 via the network 120. The database 140 or other storage devices in the system generally refer to all media with a read/write function. In some embodiments, the database 140 or other storage devices in the system may be a device within the system, or an external device of the system. The connection between the database 140 and other storage devices in the system may be wired or wirelessly. The connection or communication between the database 140 and other modules in the system may be wired or wirelessly. The network 120 may be a channel for providing information exchange.

The server 110, or a part thereof, and/or the user device 130 may be connected to the database 140 differently. The access rights of the modules to the database 140 may be limited. For example, the server 110, or a part thereof, may have the access right to the database 140 and may read or modify public or personal information from the database 140; while the user device 130 may read some of the public information or personal information related to the user when certain conditions are satisfied. For example, the server 110 may update/modify public information or information related to a user (a passenger or a driver) in the database 140 based on an experience of the user using the server 110 one or more times. For another example, when a user device 130 (a party that provides a service or assists in providing a service) receives a service request from another user device 130 (a party that needs or subscribes to a service request), information related to the user device 130 (the party that needs or subscribes to a service request) in the database 140 may be partially viewed, but the user device 130 (the party that provides a service or assists in providing a service) may not autonomously modify the information related to the user device 130 (the party that needs or subscribes to a service request) in the database 140, but can only report to the server 110, and the server 110 may decide whether to modify the information related to the user device 130 (the party that needs or subscribes to a service request) in the database 140.

In some embodiments, information exchange between different parts in the system may be done by means of service request. An object of the service request may be any product. In some embodiments, a product may be a tangible product or an intangible product. The tangible product may be an object in any shape or size, for example, food, medicine, daily necessities, a chemical product, electrical apparatus, clothing, an automobile, a real estate, luxury goods, or the like, or any combination thereof. The intangible product may include a service product, a financial product, an intellectual product, an Internet product, or the like, or any combination thereof. The Internet product may be any product that satisfies needs of people for information, entertainment, communication or commerce. The Internet product may be classified in many ways, and when classified based on a carry platform thereof, the Internet product may include a personal host product, a Web product, a mobile Internet product, a commercial host platform product, an embedded product, or the like, or any combination thereof. The mobile Internet product may be software, a program, or a system used in a mobile terminal. The mobile terminal may include a laptop computer, a tablet computer, a mobile phone, a personal digital assistance (PDA), an electronic watch, a POS device, a carputer, an on-board television, a smart wearable device, or the like, or any combination thereof. For example, a variety of software or applications used in computers or mobile phones for social events, shopping, transportation, entertainment, learning and investment. The transportation software or transportation application may be transportation software, transportation scheduling software or a transportation scheduling application, a map, or other software or applications. The transportation scheduling software or transportation scheduling application may reserve a horse, a carriage, a rickshaw (e.g., a wheelbarrow, a two-wheeled bicycle, a tricycle, etc.), an automobile (e.g., a taxi, a bus, etc.), a train, a subway, a ship and an aircraft (e.g., an airplane, a helicopter, a space shuttle, a rocket, a hot air balloon, etc.), or the like, or any combination thereof.

FIG. 2 is a structure diagram illustrating an exemplary server and/or user device 200 according to some embodiments of the present disclosure. The server and/or user device 200 may include a processor 210, a storage 220 and a network interface 230. In some embodiments, the server and/or user device 200 may be centralized or distributed. The server and/or user device 200 may be local or remote. In some embodiments, the server 110 and/or user device 130 illustrated in FIG. 1 may have the same or similar structure and/or configuration as the server and/or user device 200 illustrated in FIG. 2.

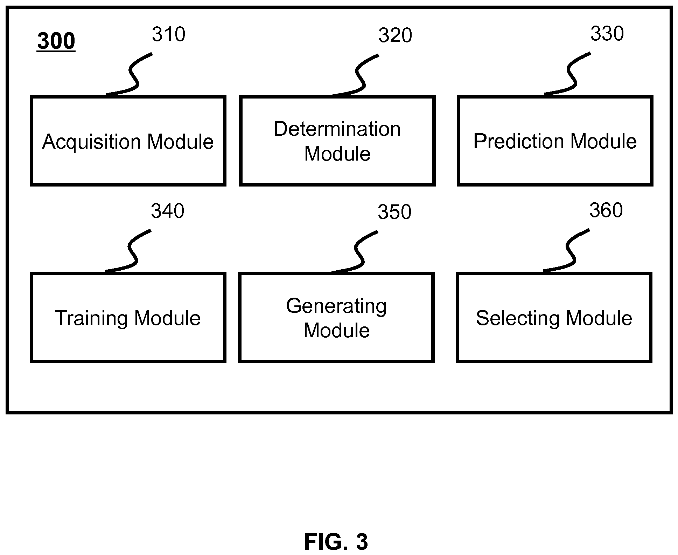

The processor 210 may control an operation of the server and/or user device 200 via computer program instructions. The computer program instructions may be stored in one or more storage 220. In some embodiments, the processor 210 may include a microcontroller, a reduced instruction-set computer (RISC), an application specific integrated circuit (ASIC), an application specific instruction-set processor (ASIP), a central processing unit (CPU), a graphic processing unit (GPU), a physical processing unit (PPU), a microprocessor unit, a digital signal processor (DSP), a field programmable gate array (FPGA), or other circuits or processors capable of executing computer program instructions, or any combination thereof. In some embodiments, the processor 210 may have the same or similar structure and/or configuration as the processor 300 illustrated in FIG. 3.

The storage 220 may store a plurality of information, for example, computer program instructions and data of the server and/or user device 200. In some embodiments, the storage 220 may be a device that stores information by means of electrical energy, for example, a random access memory (RAM), a read only memory (ROM), or other different kinds of storage. The random access memory may include a decimal count tube, a selectron tube, a delay line memory, a Williams tube, a dynamic random access memory (DRAM), a static random access memory (SRAM), a thyristor random access memory (T-RAM), a zero-capacitor random access memory (Z-RAM), or the like, or any combination thereof. The read only memory may include a magnetic bubble memory, a magnetic twistor memory, a thin-film memory, a magnetic plated wire memory, a magnetic core memory, a magnetic drum memory, an optical disk drive, a hard disk, a tape, a non-volatile random access memory (NVRAM), a phase change memory, a magnetic resistive random access memory, a ferroelectric random access memory, a non-volatile SRAM, a flash memory, an electrically erasable programmable read-only memory, an erasable programmable read-only memory, a programmable read-only memory, a mask ROM, a floating connection gate random access memory, a nano random access memory, a racetrack memory, a resistive random access memory, a programmable metallization cell, or the like, or any combination thereof. In some embodiments, the storage 220 may be a device that stores information by means of magnetic energy, for example, a hard disk, a floppy disk, a tape, a magnetic core memory, a magnetic bubble memory, a USB flash disk, and a flash memory. In some embodiments, the storage 220 may be a device that stores information by means of optical manners, for example, a CD or DVD. In some embodiments, the storage 220 may be a device that stores information by means of magneto-optical manners, for example, a magneto-optical disk. In some embodiments, an access manner of the storage 220 may be a random storage, a serial access storage, a read-only storage, or the like, or any combination thereof. In some embodiments, the storage 220 may be a non-permanent memory or a permanent memory. In some embodiments, the storage 220 may be local or remote (for example, the storage 220 may be in a cloud server).

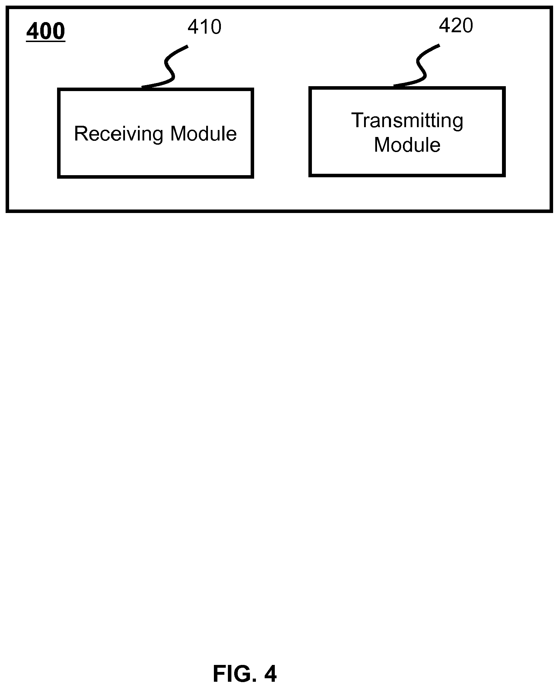

The network interface 230 may implement communication between a part of or all components of the server and/or user device 200 and one or more devices (e.g., the database 140, the user device 130, the server 110, etc.) shown in FIG. 1 through the network 120. In some embodiments, the network interface 230 may implement communication among a part of or all components of the server and/or user device 200 through the network 120. The network interface 230 may be a wired network interface or a wireless network interface. The network interface 230 may include a metal cable, an optical fiber, a hybrid cable, a connection circuit, or other wired network interfaces, or the like, or any combination thereof. The network interface 230 may include a wireless local area network (WLAN) interface, a local area network (LAN) interface, a wide area network (WAN) interface, a Bluetooth interface, a wireless sensor network (ZigBee) interface, a near field communication (NFC) interface, or the like, or any combination thereof. In some embodiments, the network interface 230 may have the same or similar structure and/or configuration as the network interface 400 shown in FIG. 4.

FIG. 3 is a block diagram illustrating an exemplary processor 300 according to some embodiments of the present disclosure. In some embodiments, the processor 300 illustrated in FIG. 3 may have the same or similar structure or configuration as the processor 210 in the server and/or user device 200 illustrated in FIG. 2. The processor 300 may include an acquisition module 310, a determination module 320, a prediction module 330, a training module 340, a generating module 350 and a selecting module 360. It should be noted that the above description of the structure of the processor 300 is merely exemplary and does not limit the present disclosure. In some embodiments, the processor 300 may further include other modules or units. In some embodiments, some of the above-mentioned modules may be removed. In some embodiments, some of the above-mentioned modules may be combined into one module. In some embodiments, the above-mentioned modules may be independent. In some embodiments, the above-mentioned modules may be interconnected. Some or all of the above-mentioned modules may be connected with the network 120. The above-mentioned modules may be centralized or distributed. One or more of the above-mentioned modules may be local or remote. In some embodiments, functions of one or more above-mentioned modules may be implemented by one or more processors 300. In some embodiments, functions of one or more above-mentioned modules may be implemented by one or more processors 210, one or more storage 220, one or more network interfaces 230, or the like, or any combination thereof.

The acquisition module 310 may obtain required information in a plurality of ways. The ways for obtaining information may be direct (for example, obtaining the information from one or more user devices 130 via the network 120 directly) or indirect (for example, obtaining the information via the database 140, the storage 220, or other modules or units in the processor 210). In some embodiments, the information obtained by the acquisition module 310 may include historical orders, a current order, personal information of a user, scene information associated with a user, frequencies that a user appears in one or more scenes, map data, or the like, or any combination thereof. In some embodiments, the information obtained by the acquisition module 310 may be transmitted to other units or modules in the processor 210 for processing. In some embodiments, the information obtained by the acquisition module 310 may be transmitted to the storage 220 or the database 140 for storing, or may be transmitted to the user device 130 via the network interface 230.

The determination module 320 may receive information of the acquisition module 310, the database 130, the storage 220, the network interface 230, the processor 210 or other units or modules, and may process the received information. In some embodiments, the determination module 320 may determine a user profile (including a transportation means, a destination, a frequently stayed location, a transportation means model, a destination distribution model, etc.) associated with the user device. In some embodiments, the determination module 320 may determine information related to the current order based on the user profile. In some embodiments, the determination module 320 may determine frequencies that a user appears in one or more scenes based on the scene information obtained by the acquisition module 310. The determination module 320 may further determine a feature vector. In some embodiments, the determination module 320 may implement a calculation function, or the like. In some embodiments, a result generated by the determination module 320 may be transmitted to other modules or units. For example, the result generated by the determination module 320 may be transmitted to the database 140 or the storage 220 for storing. A result generated by the determination module 320 may be transmitted to the prediction module 330, the training module 340, the generating module 350 or the selecting module 360 for other processing.

The prediction module 330 may receive information (e.g., a current order) from the acquisition module 310 and process the received information. In some embodiments, the prediction module 330 may predict one or more order completion probabilities of the current order for each of the one or more historical transportation means based on the current order, and generate a transportation means model. In some embodiments, the prediction module 330 may predict the one or more order completion probabilities of the current order for each of the one or more historical transportation means based on the transportation means model.

The training module 340 may perform a training to obtain one or more models. The one or more models may include a transportation means model, a destination distribution model, or the like, or any combination thereof. In some embodiments, the transportation means model obtained by the training may be a linear regression model or a nonlinear regression model. The linear regression model may include a simple linear regression model, a binary linear regression model, a multiple linear regression model, a logistic regression model, a support vector machine model, or the like, or any combination thereof. The nonlinear regression model may be a simple nonlinear regression model, a binary nonlinear regression model and a multiple nonlinear regression model, a neural network, a decision tree, a Markov chain, a Monte Carlo method, a variation method, or the like, or any combination thereof. Training data may include one or more inputs and one or more outputs. In some embodiments, the one or more inputs may include characteristic information of an order.

The generating module 350 may generate a feature vector. In some embodiments, the generating module 350 may collect semantic expressions of a user of common locations and/or transportation means in one or more time periods within a preset time cycle and one or more frequencies that the user appears in one or more scenes within a preset time period, and generate a feature vector of the user under a transportation scene. In some embodiments, one or more scenes may include an airport, a railway station, a movie theater, a shopping mall, a foreign country, or the like, or any combination thereof.

The selecting module 360 may select information. In some embodiments, the selecting module 360 may select a historical order obtained by the acquisition module 310. For example, the selecting module 360 may set a certain condition and select a historical order that satisfies the condition. In some embodiments, the selecting module 360 may select a transportation means, a destination or a frequently stayed location based on a certain condition. For example, the selecting module 360 may select a destination that appears more than a preset range in destinations of the historical orders. In some embodiments, the selecting module 360 may further include a deleting unit, a computing unit and a result determining unit. In some embodiments, the deleting unit may delete a location that appears less than a second preset number of times in first information to obtain second information. In some embodiments, the computing unit may determine a first ratio for one or more locations, time intervals of appearances of one or more locations, a second ratio for one or more locations in the second information, a second location, or the like, or any combination thereof, in the second information. In some embodiments, the result determining unit may determine a location that satisfies a certain condition as a frequently stayed location.

In some embodiments, the acquisition module 310, the determination module 320, the prediction module 330, the training module 340, the generating module 350, and the selecting module 360 may be different modules embodied in one system, or integrated into one module that implements functions of the two or more above-mentioned modules. Similar modifications are still within the protection scope of the claims in the present disclosure.

FIG. 4 is a block diagram illustrating an exemplary network interface 400 according to some embodiments of the present disclosure. In some embodiments, the network interface 400 illustrated in FIG. 4 may have the same or similar structure or configuration as the network interface 230 of the server and/or user device 200 illustrated in FIG. 2. The network interface 400 may be a network interface in the server 110, or a network interface of the user device 130. The network interface 400 may include a receiving module 410 and a transmission module 420. The receiving module 410 may receive information. The received information may be a text, a picture, audio, a video, or the like, or any combination thereof. In some embodiments, the information may include a current order transmitted by the user device 130, historical orders associated with the user device 130, personal information of a user (a passenger or a driver) associated with the user device 130, traffic information, weather information, map information, or the like, or any combination thereof. For example, the receiving module 410 may receive a confirmation from the user device 130 on information related to the current order. In some embodiments, the receiving module 410 may also convert optic information, acoustic information, electromagnetic information, or any combination thereof of a passenger or a background (e.g., surrounding environment) into a still picture, a video, an audio, a mechanical vibration, etc., by means of signal conversion or the like to be collected and recorded.

The transmission module 420 may transmit information. In some embodiments, the transmission module 420 may transmit the information generated by the processor 210 to the user device 130, or to a storage for storing. For example, the transmission module 420 may transmit information related to the current order to the user device 130. In some embodiments, the transmission module 420 may transmit the generated information to the processor 210 for processing. The transmitted information may be a text, a picture, audio, a video, or the like, or any combination thereof.

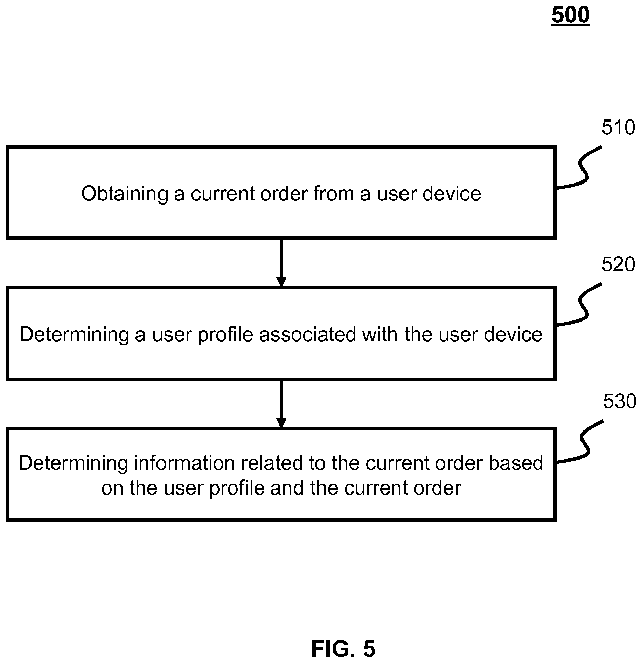

FIG. 5 is a flowchart illustrating an exemplary process 500 for determining information related to a current order according to some embodiments of the present disclosure. The process 500 for determining information related to a current order may be applied to the transportation service system illustrated in FIG. 1. For example, the process may be stored in a non-transitory memory of the server 200 as a set of instructions and be invoked and executed by the processor 210.

In step 510, the processor 210 (e.g., the acquisition module 310 of the processor 210) may obtain a current order from the user device 130 (for example, communicating with the user device and obtaining the current order via the network 120). In some embodiments, the current order may include current time information and/or current location information of the user device 130. In some embodiments, the current order may be generated by the user device 130 after a certain operation is executed on the user device. For example, the operation may include starting, by a user, a relevant service application program on the user device 130, clicking an icon on an interface (service application program interface) of the service application program shown on a display screen of the user device, or choosing an input operation on the interface of the service application program. In some embodiments, the current order may include an intention of the user device for requesting a service. In some embodiments, the current order may include location information of the order (e.g., a current positioning location of a user and/or user device, a departure location and/or a destination of the current order inputted by a user), time information of the order (e.g., a departure time, a departure time period of the current order), identification of the user device, or the like, or any combination thereof.

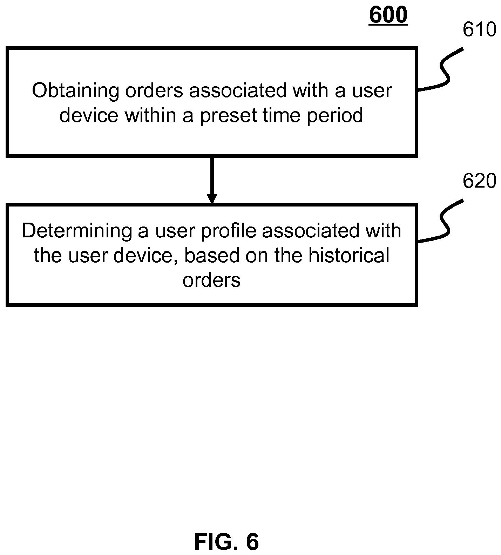

In step 520, the processor 210 (e.g., the determination module 320 of the processor 210) may determine a user profile associated with the user device 130. In some embodiments, the user profile may be virtual representative or description of an actual user, and may be used to outline a target user, associate with user needs and predict a user behavior. For example, the user profile may include information of a frequently stayed location (e.g., a frequent departure location, a frequent destination, a frequent positioning location, a destination distribution model, etc.), information of a transportation means (e.g., a transportation means model, a preferred transportation means of the user device 130, one or more probabilities that the user device 130 selects one or more historical transportation means, one or more order completion probabilities of the order for each of one or more historical transportation means, etc.), payment information (e.g., a unit price of an order, a total price, a pricing manner, additional charges, discounts, etc.), identification of the user device, information of a user preference, or the like, or any combination thereof. In some embodiments, the user profile may be used to mark a user or a group of users. For example, the user profile may be marked as a business traveler, an office worker, a student, or the like, or any combination thereof. In some embodiments, the processor 210 may determine a user profile associated with the user device 130 based on a process 600 illustrated in FIG. 6.

In step 530, the processor 210 (e.g., the determination module 320 of the processor 210) may determine information related to the current order based on the user profile and the current order. In some embodiments, information related to the current order may include information of a frequently stayed location of the current order (e.g., a departure location of the current order, a destination of the current order, etc.), information of a current transportation means included in the current order (e.g., a transportation means of the current order), payment information included in the current order, or the like, or any combination thereof. For example, the processor 210 may determine a current transportation means included in the current order based on the user profile. As another example, the processor 210 may determine a recommended destination included in the current order based on the user profile.

In some embodiments, the server 110 (e.g., the network interface 230 of the server 110, or the transmission module 410 of the network interface 230) may transmit the information related to the current order which is determined in step 530 to the user device 130. In some embodiments, the user device 130 may perform operations on the information related to the current order transmitted by the server 110. In some embodiments, the operations may be confirming the information related to the current order, rejecting or denying the information related to the current order, modifying the information related to the current order, or the like, or any combination thereof. In some embodiments, the server 110 (e.g., the network interface 230 of the server 110, or the receiving module 410 of the network interface 230) may receive the operations (e.g., a confirmation operation, a denial operation, a modification operation, etc.) performed by the user device 130 on the information related to the current order.

FIG. 6 is a flowchart illustrating an exemplary process 600 for determining a user profile associated with the user device according to some embodiments of the present disclosure. The process 600 may be applied to the transportation service system illustrated in FIG. 1. For example, the process may be stored in a non-transitory memory of the server 200 as a set of instructions and be invoked and executed by the processor 210.

In step 610, the processor 210 (e.g., the acquisition module 310 of the processor 210) may establish communication with the user device 130 via the network 120 and obtain historical orders within a preset time period from the user device 130. For example, the server 110 may obtain historical orders associated with the user in a certain time period (e.g., a year, six months, three months, one month, ten days, one week, etc.). The historical orders may include time information, location information, payment information, identification of the user device, or the like, or any combination thereof.

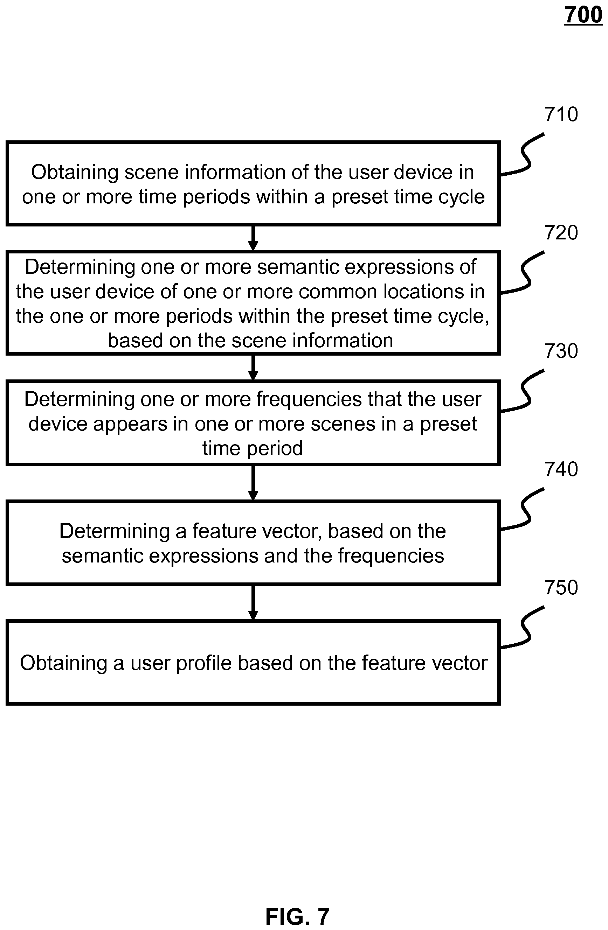

In step 620, the processor 210 (e.g., the determination module 320 of the processor 210) may determine a user profile associated with the user device 130 based on the historical orders. In some embodiments, the processor 210 may determine the user profile associated with the user device 130 based on a process 700 illustrated in FIG. 7.

FIG. 7 is a flowchart illustrating an exemplary process 700 for obtaining a user profile according to some embodiments of the present disclosure.

As illustrated in FIG. 7, in step 710, the processor 210 (e.g., the acquisition module 310 of the processor 210) may obtain scene information of the user in one or more time periods within a preset time cycle. The scene may refer to a combination of a location of a place and surrounding environment thereof. For example, a scene may include but not limited to a frequently stayed business district, a frequently stayed administrative area, a frequently stayed city, a frequently stayed country, etc. In some embodiments, the scene may be a public place or a private place. For example, the scene may be an airport, a railway station, a shopping mall, a movie theater, a dock, a park, a school, an office building, a hotel, a residential home of a user, a residential home of a friend, or the like, or any combination thereof.

In some embodiments, the processor 210 may obtain historical orders associated with a user within a preset time period. Scene information of the user in one or more time periods within a preset time cycle may be obtained based on the historical orders. For example, the processor 210 may obtain historical orders associated with the user within a certain time period (e.g., a year, six months, three months, one month, ten days, one week, etc.). The historical orders may include time information, location information, payment information, identification of the user device, or the like, or any combination thereof. Based on the historical orders, the processor 210 may obtain the scene information of the user in one or more time periods (e.g., one or more hours, one or more days, one or more weeks, one or more months, etc.) within a preset time cycle (e.g., 24 hours, seven days, ten days, one month, etc.).

In some embodiments, the processor 210 may obtain positioning information of the user or user device 130 within a preset time period. The scene information of the user in one or more time periods within a preset time cycle may be obtained based on the positioning information. For example, the user device 130 carried by the user may be a device having a positioning function. The processor 210 may obtain the positioning information associated with the user device 130 in a certain time period (e.g., a year, six months, three months, one month, ten days, one week, etc.). The positioning information may include location information, time information, identification of the user device, or the like, or any combination thereof. Based on the positioning information, the processor 210 may obtain the scene information of the user in one or more time periods (e.g., one or more hours, one or more days, one or more weeks, one or more months, etc.) within a preset time cycle (e.g., 24 hours, seven days, ten days, one month, etc.).

In step 720, the processor 210 (e.g., the acquisition module 310 of the processor 210) may obtain one or more semantic expressions of the user of one or more common locations within the preset time cycle, based on the scene information. In some embodiments, the semantic expression may be a one-dimensional or multidimensional vector. The semantic expression may include a time period, a common location (e.g., a departure location, a destination, other locations, etc.), a transportation means, or the like, or any combination thereof. For example, the semantic expression may be a certain time period and a common location corresponding to the certain time period associated with the user. As another example, the semantic expression may be a certain time period, a departure location and a destination, as well as a transportation means associated with the user.

In step 730, the processor 210 (e.g., the acquisition module 310 of the processor 210) may obtain one or more frequencies that the user device appears in one or more scenes in a preset time period. In some embodiments, the scene may be a combination of location where the user frequently or repeatedly visits and the surrounding environment thereof. In some embodiments, the scene may be a frequently stayed area, for example, a frequently stayed business district, a frequently stayed administrative area, a frequently stayed city, a frequently stayed country, etc. In some embodiments, the scene may be a public place or a private place. For example, the scene may be an airport, a railway station, a shopping mall, a movie theater, a dock, a park, a school, an office building, a hotel, a residential place of a user, a residential home of a friend, or the like, or any combination thereof. In some embodiments, the scene may be a location where the user device 130 does not appear or visit frequently. In some embodiments, the scene may be a rarely stayed area, for example, a business district other than the resident business district, an administrative area other than the frequently stayed administrative area, a city other than the frequently stayed city, a country other than the frequently stayed country, etc. For example, the scene may be a location other than the location where the user settles down or resides, for example, a foreign scenic area, a public security bureau or a court.

In some embodiments, frequencies that the user appears in one or more scenes within a preset time period may be a one-dimensional or multidimensional vector. For example, the frequencies that the user appears in one or more scenes within a preset time period may include a frequency that the user appears in an airport within three months, a frequency that the user appears in a movie theater within three months, a frequency that the user appears in an office building within three months, a frequency that the user appears in a foreign country within three months, or the like, or any combination thereof. The above-mentioned one-dimensional or multidimensional vector may be obtained by quantifying these combinations.

In step 740, the processor 210 (e.g., the generating module 350 of the processor 210) may determine a feature vector based on the semantic expressions of the user of one or more common locations within the preset time cycle and the frequencies that the user device appears in one or more scenes within the preset time period. In some embodiments, the feature vector may be a feature vector of the user under a transportation scene. In some embodiments, the feature vector may be a concatenation computation of a semantic expression vector and a frequency of occurrence vector. The dimension of the feature vector may be a sum of the dimension of the semantic expression vector and the dimension of the frequency of occurrence vector.

In step 750, the processor 210 (e.g., the acquisition module 310 of the processor 210) may obtain a user profile based on the feature vector. In some embodiments, the processor 210 may cluster the feature vectors of the user under transportation scenes to obtain a user profile. In some embodiments, the processor 210 may perform the clustering based on sizes of the feature vectors, distances between the vectors, etc.

In some embodiments, the user profile may be a virtual representative of an actual user, and may be used to outline a target user, associate with user needs and predict a user behavior. For example, the user profile may include information of a common location (e.g., a frequent departure location, a frequent destination, a frequent positioning location, a destination distribution model, etc.), information of a transportation means (e.g., a transportation means model, a preferred transportation means of the user device 130, one or more probabilities that the user device 130 selects one or more historical transportation means, one or more order completion probabilities of the order for each of one or more historical transportation means, etc.), payment information (e.g., a unit price of an order, a total price, a pricing manner, additional charges, discounts, etc.), the name of a user, information of a user preference, or the like, or any combination thereof.

In some embodiments, the processor 210 may divide the users into one or more users and/or user groups based on the user profile. The processor 210 may perform an activity for different users and/or user groups according to their individual differences, different application scenes, etc., based on the user profile. For example, the processor 210 may transmit a discounting strategy (for example, transmit a shuttle coupon to a business traveler who is frequently on a business trip, transmit subsidies for designated driving to a user who frequently has a demand of designated driving services, etc.), a promotion strategy (for example, recommend a taxi to a user who has the need for reimbursement, recommend a hitch-hike to a daily office worker, etc.), a marketing strategy (for example, push an insurance commercial to a user, push a vehicle advertisement to a user, etc.), or the like, or any combination thereof to different user groups based on the user profile.

In some embodiments, one or more steps of the process 700 for obtaining a user profile as illustrated in FIG. 7 may be performed simultaneously or in a different order. For example, the processor 210 may perform step 730 of obtaining one or more frequencies that the user appears in one or more scenes within a preset time period first, and then perform step 710 of obtaining one or more scene information of the user within a preset time cycle and step 720 of determining one or more semantic expressions of the user of one or more common locations within the preset time cycle. As another example, the processor 210 may perform step 710 and step 730 simultaneously, and obtain the scene information and the frequency of appearances of the user simultaneously.

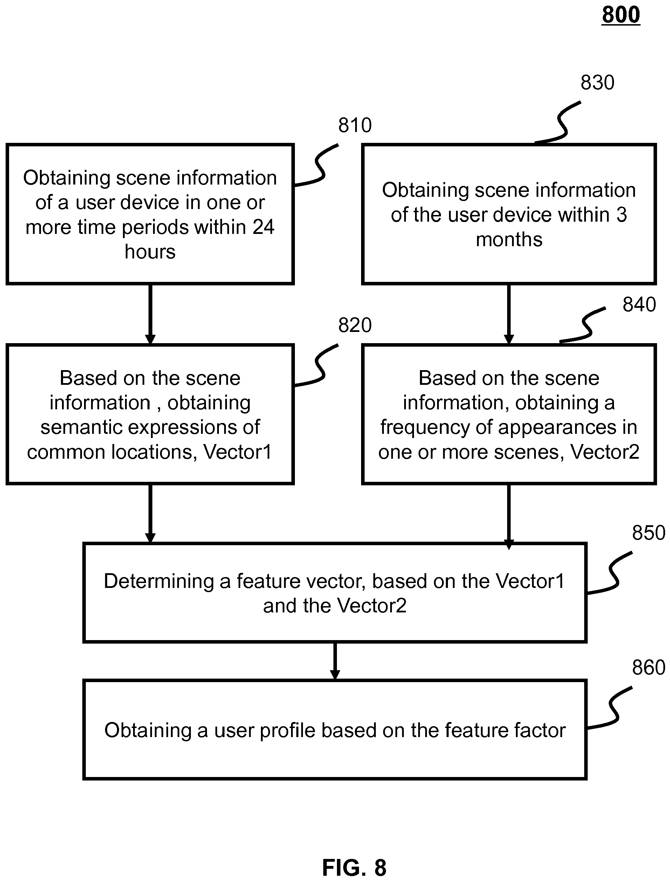

For better understanding, FIG. 8 is a flowchart illustrating an exemplary process 800 for obtaining a user profile as illustrated in FIG. 7 with a preset time cycle of 24 hours and a preset time period of three months.

In step 810, the processor 210 (e.g., the acquisition module 310 of the processor 210) may obtain scene information of the user in one or more time periods within 24 hours.

In step 820, the processor 210 (e.g., the acquisition module 310 of the processor 210) may obtain semantic expressions of common locations: Vector1. For example, the Vector1 may be (00:00-06:59 residential area, ... 08:00-08:59 school, 09:00-18:59 office building, 19:00-19:59 shopping mall, 20:00-23:59 residential area).

In step 830, the processor 210 (e.g., the acquisition module 310 of the processor 210) may obtain scene information of the user within three months.

In step 840, the processor 210 (e.g., the acquisition module 310 of the processor 210) may obtain frequencies that a user appears in one or more scenes: Vector2. For example, the Vector2 may be (a frequency that the user appears in an airport within three months, a frequency that the user appears in a railway station within three months, ... a frequency that the user appears in a foreign country within three months).

In step 850, the processor 210 (e.g., the generating module 350 of the processor 210) may determine a feature vector based on the Vector1 and the Vector2. For example, the feature vector may be (Vector1, Vector2).

In step 860, the processor 210 (e.g., the acquisition module 310 of the processor 210) may obtain a user profile based on the feature vector (Vector1, Vector2). For example, the processor 210 may cluster one or more feature vectors to obtain one or more user profiles. As another example, the processor 210 may determine a degree of similarity of users based on distances between feature vectors. One or more user profiles may be obtained based on the degree of similarity of the users.

In some embodiments, the step 810 (or the step 810 and the step 820) and the step 830 (or the step 830 and the step 840) may be performed simultaneously or in reverse order.

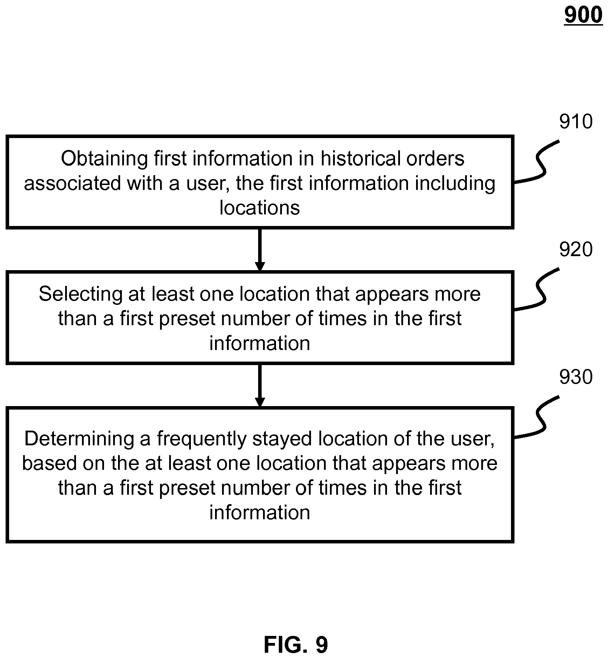

Returning to FIG. 6, in some embodiments, the user profile may include frequently stayed locations. The step 620 of determining the user profile based on historical orders may be accomplished according to a process 900 for determining a frequently stayed location illustrated in FIG. 9. The process 900 may be applied to the transportation service system illustrated in FIG. 1. For example, the process may be stored in a non-transitory memory of the server 200 as a set of instructions and be invoked and executed by the processor 210. In some embodiments, a frequently stayed location may be a location where the user frequently appears, for example, a frequently appeared departure location, a frequently appeared destination, a frequently appeared positioning location, etc. In some embodiments, the term "frequently" may be represented by a number of appearance, a frequency of appearance, a proportion of the number of appearance, or the like, or any combination thereof.

In step 910, the processor 210 (e.g., the acquisition module 310 of the processor 210) may obtain first information in historical orders associated with the user. In some embodiments, the historical orders of the user may be a collection of order information associated with the user within a preset time period (e.g., a year, six months, one month, ten days, one week, etc.). In some embodiments, the first information may include location information (e.g., a departure location, a destination, a positioning location, a geographic coordinate, a number of appearances of one or more locations associated with the user, etc.), time information (e.g., a departure time, an arrival time, an order duration, etc.), basic information of the user (e.g., a name, a gender, an age of the user, etc.), or the like, or any combination thereof. For example, the server 110 may obtain the location information and the name of the user in historical orders associated with the user within three months and determine these as the first information.

In step 920, the processor 210 (e.g., the selecting module 360 of the processor 210) may select at least one location that appears more than a first preset number of times in the first information. In some embodiments, the first preset number of times may be a number of times (e.g., three times, five times, ten times, 20 times, 100 times, etc.) set by the server 110 based on an application scene. For example, the processor 210 may select a location that appears more than five times in the first information.

In step 930, the processor 210 (e.g., the determination module 320 of the processor 210) may determine a frequently stayed location of the user based on the at least one location that appears more than the first preset number of times in the first information. In some embodiments, the processor 210 may determine the location that appears more than the first preset number of times in the first information as the frequently stayed location. For example, the processor 210 may determine locations that appear more than five times in the first information as frequently stayed locations. In some embodiments, the processor 210 may perform noise reduction processing on locations in the first information, and determine the frequently stayed locations based on the processed locations. For example, the processor 210 may remove a noise location of which the number of appearances is relatively small in the first information, and then determine the frequently stayed locations.

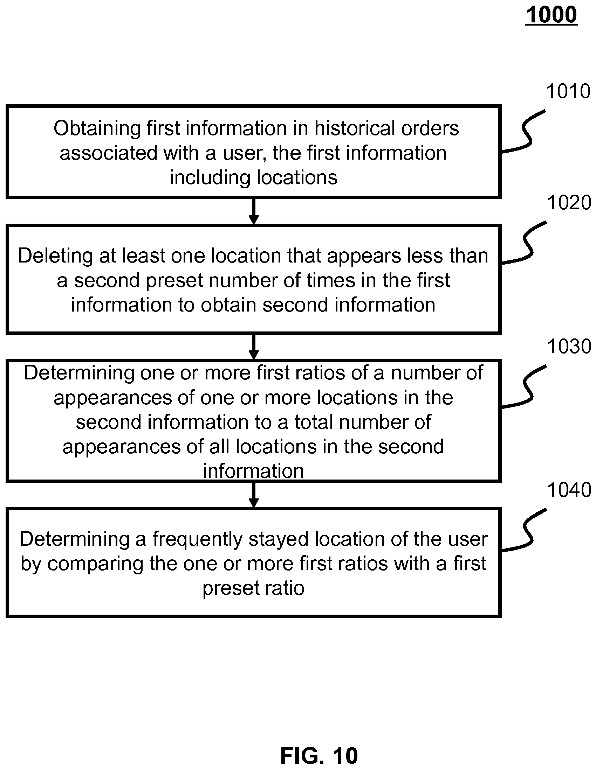

FIG. 10 is a flowchart illustrating an exemplary process 1000 for determining a frequently stayed location according to some embodiments of the present disclosure.

In step 1010, the processor 210 (e.g., the acquisition module 310 of the processor 210) may obtain first information in historical orders associated with a user. In some embodiments, the historical orders of a user may be a collection of order information associated with the user within a preset time period (e.g., a year, six months, one month, ten days, one week, etc.). In some embodiments, the first information may include location information (e.g., a departure location, a destination, a positioning location, a geographic coordinate, a number of appearances of one or more locations associated with the user, etc.), time information (e.g., a departure time, an arrival time, an order duration, etc.), basic information of the user (e.g., a name, a gender, an age of the user, etc.), or the like, or any combination thereof. For example, the processor 210 may obtain the location information and the name of the user in historical orders associated with the user within three months and determine these as the first information.

In step 1020, the processor 210 (e.g., the selecting module 360 of the processor 210) may delete at least one location that appears less than a second preset number of times in the first information to obtain second information. In some embodiments, the second preset number of times may be a number of times (e.g., once, twice, three times, five times, ten times, etc.) set by the processor 210 based on an application scene. For example, 124 locations may exist in the first information and 24 of which appear less than twice. The processor 210 may delete the 24 locations which appear less than twice in the first information to obtain the second information. 100 locations may exist in the second information, and all locations appear 100 times.

In step 1030, the processor 210 (e.g., the selecting module 360 of the processor 210) may determine one or more first ratios of a number of appearances of one or more locations in the second information to a total number of appearances of all locations in the second information. For example, the total number of appearances of all locations in the second information is 100 times, a first ratio of a location which appears five times is 5%, a first ratio of a location which appears ten times is 10%, and a first ratio of a location which appears fifteen times is 15%.

In step 1040, the processor 210 (e.g., the determination module 320 of the processor 210) may determine a frequently stayed location of the user by comparing one or more first ratios for one or more locations in the second information with a first preset ratio. In some embodiments, the first preset ratio may be a number of ratio (e.g., 25%, 50%, 80%, 95%, etc.) set by the processor 210 according to the application scene. For example, the processor 210 may determine a location whose first ratio exceeds 80% in the second information as a frequently stayed location.

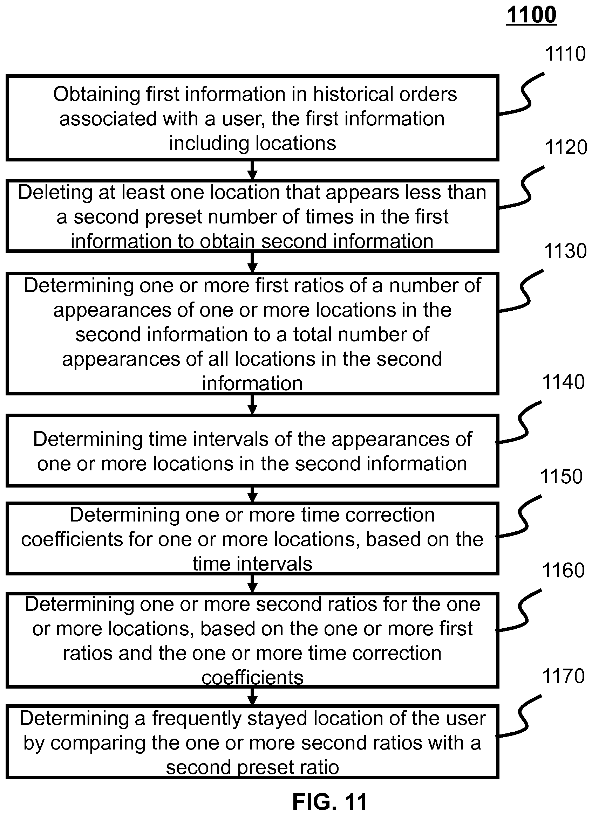

FIG. 11 is a flowchart illustrating an exemplary process 1100 for determining a frequently stayed location according to some embodiments of the present disclosure. The process 1100 may be applied to the transportation service system illustrated in FIG. 1. For example, the process may be stored in a non-transitory memory of the server 200 as a set of instructions and be invoked and executed by the processor 210.

In step 1110, the processor 210 (e.g., the acquisition module 310 of the processor 210) may obtain first information in historical orders associated with a user. In some embodiments, the historical orders of a user may be a collection of order information associated with the user within a preset time period (e.g., a year, six months, one month, ten days, one week, etc.). In some embodiments, the first information may include location information (e.g., a departure location, a destination, a positioning location, a geographic coordinate, a number of appearances of one or more locations associated with the user, etc.), time information (e.g., a departure time, an arrival time, an order duration, etc.), basic information of the user (e.g., a name, a gender, an age of the user, etc.), or the like, or any combination thereof. For example, the processor 210 may obtain the location information and the name of the user in historical orders associated with the user within three months and determine these as the first information.

In step 1120, the processor 210 (e.g., the selecting module 360 of the processor 210) may delete at least one location that appears less than a second preset number of times in the first information to obtain second information. In some embodiments, the second preset number of times may be a number of times (e.g., once, twice, three times, five times, ten times, etc.) set by the processor 210 based on an application scene. For example, 124 locations may exist in the first information and 24 of which appear less than twice. The processor 210 may delete the 24 locations which appear less than twice in the first information to obtain the second information. 100 locations may exist in the second information, and all locations appear 100 times.

In step 1130, the processor 210 (e.g., the selecting module 360 of the processor 210) may determine one or more first ratios of a number of appearances of one or more locations in the second information to a total number of appearances of all locations in the second information. For example, the total number of appearances of all locations in the second information is 100 times, a first ratio of a location which appears five times is 5%, a first ratio of a location which appears ten times is 10%, and a first ratio of a location which appears fifteen times is 15%.

In step 1140, the processor 210 (e.g., the determination module 320 of the processor 210) may determine time intervals of the appearances of one or more locations in the second information. In some embodiments, the time intervals may be a time interval between the last time of appearance before a time period of the historical orders is obtained and the first time of appearance in the time period of the obtained historical orders. Taking three months (from January 1, 2016 to March 31, 2016) as an example, before the time period of the historical orders is obtained (before January 1, 2016), the last time of appearance of a location (e.g., an amusement park) in the second information is December 14, 2015, the first time of appearance of the amusement park within three months of the obtained historical orders is February 14, 2016, and accordingly, the processor 210 may determine a time interval of the appearance of the amusement park as 62 days in the second information.

In step 1150, the processor 210 (e.g., the determination module 320 of the processor 210) may determine one or more time correction coefficients for one or more locations based on the time intervals of one or more locations in the second information. In some embodiments, the time correction coefficient may be any number used to compensate for a time error. In some embodiments, the time correction coefficient may be inversely proportional to the time interval and decreases as the time interval increases. In some embodiments, the time correction coefficient may be a number between zero and one. For example, when the time interval is 80 to 90 days, the time correction coefficient is 0.1; when the time interval is 70 to 80 days, the time correction coefficient is 0.2; when the time interval is 60 to 70 days, the time correction coefficient is 0.3; when the time interval is 50 to 60 days, the time correction coefficient is 0.3; and when the time interval is 0 to 50 days, the time correction coefficient is 1. The time interval of the appearance of the amusement park is 62 days, so the time correction coefficient of the amusement park is 0.3.

In step 1160, the processor 210 (e.g., the determination module 320 of the processor 210) may determine one or more second ratios for the one or more locations based on the one or more first ratios for the one or more locations and the one or more time correction coefficients for the one or more locations. In some embodiments, the second ratio may be a product of the first ratio and the time correction coefficient. For example, assuming that the first ratio of the amusement park is 20% and the time correction coefficient of the amusement park is 0.3, therefore the second ratio of the amusement park is 6% (the product of 20% and 0.3).

In step 1170, the processor 210 (e.g., the determination module 320 of the processor 210) may determine a frequently stayed location of the user by comparing the one or more second ratios for the one or more locations and a second preset ratio. In some embodiments, the second preset ratio may be a number of ratio (e.g., 5%, 10%, 50%, 85%, etc.) set by the processor 210 according to the application scene. For example, the processor 210 may determine one or more locations whose second ratio exceeds 50% in the second information as frequently stayed locations.

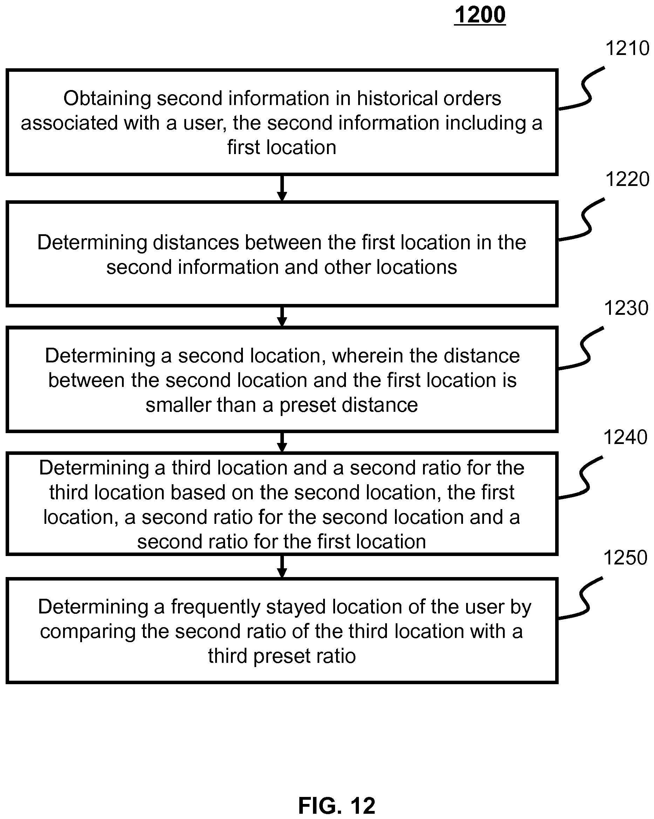

FIG. 12 is a flowchart illustrating an exemplary process 1200 for determining a frequently stayed location according to some embodiments of the present disclosure. The process 1200 may be applied to the transportation service system illustrated in FIG. 1. For example, the process may be stored in a non-transitory memory of the server 200 as a set of instructions and be invoked and executed by the processor 210.

In step 1210, the processor 210 (e.g., the acquisition module 310 of the processor 210) may obtain second information in historical orders associated with a user. In some embodiments, the second information may be obtained by the method illustrated in the step 1020 of FIG. 10. In some embodiments, the second information may include location information (e.g., a departure location, a destination, a positioning location, a geographic coordinate, a number of appearances of one or more locations associated with the user, etc.), time information (e.g., a departure time, an arrival time, an order duration, etc.), basic information of the user (e.g., a name, a gender, an age of the user, etc.), or the like, or any combination thereof. In some embodiments, the second information may include a first location. In some embodiments, the first location may be one or more locations in the second information.

In step 1220, the processor 210 (e.g., the determination module 320 of the processor 210) may determine distances between one or more first locations and other first locations in the second information. In some embodiments, the first location may be one or more locations in the second information. In some embodiments, the processor 210 may traverse one or more locations in the second information, and determine distances between the first location and other first locations in the second information.

In step 1230, the processor 210 (e.g., the determination module 320 of the processor 210) may compare distances between other locations and the first location in the second information with a preset distance, and determine one of the other first locations whose distance from the first location is less than the preset distance as a second location. In some embodiments, the preset distance may be a number of distance (e.g., 200 meters, 500 meters, 1000 meters, two kilometers, etc.) set by the processor 210 according to an application scene. For example, the processor 210 may determine one or more locations whose distances from the first location are less than 500 meters as second locations. In some embodiments, one first location may correspond to at least one second location. For example, the first location in the second information may include location A, location B, location C, location D and location E. The processor 210 may determine one or more distances between the location A and other first locations (e.g., the location B, the location C, the location D and the location E). If distances between the location B and the location A and between the location C and the location A are less than the preset distance, and distances between the location D and the location A and between the location E and the location A are greater than the preset distance, the location B and the location C may be referred to as second locations corresponding to the first location A. In some embodiments, the processor 210 may traverse each location in the second information, calculate one or more distances between the location and other locations in the second information separately, and determine second locations corresponding to the location. In some embodiments, for example, if a location B is already determined as the second location of the first location A, distances between the location B and other locations (e.g., location C, location D or location E) may not be calculated anymore. In this example, the second locations corresponding to the first location A are location B and location C, and therefore, the processor 210 may further calculate a distance between the location D and the location E. If the distance between the location D and the location E is less than a preset distance, the location E is determined to be the second location corresponding to the location D.

In step 1240, the processor 210 (e.g., the determination module 320 of the processor 210) may determine a third location in the second information and a second ratio for the third location based on the second location, the first location, a second ratio for the second location and a second ratio for the first location in the second information. In some embodiments, the second ratio for the second location and the second ratio for the first location may be determined according to the process 1100 illustrated in FIG. 11 of the present disclosure.

In some embodiments, the third location may be a location merged by the first location and at least one second location. Table 1 is an exemplary table of merging location information. For example, for locations in Table 1, the third location may be a location merged based on the first location and the second location within a distance therebetween less than 500 meters. A distance between the West Gate, District 2, Longyueyuan located at the Wenhua Road, Changping District, Beijing and the West Gate, District 2, Longyueyuan located at the Longteng Street, Changping District, Beijing is 343 meters and is less than 500 meters, and therefore, the two locations may be merged into one location and serve as the third location. For the Yong Ding Men Dong Jie, Beijing and Yong Ding Men Dong, Beijing, Subway West Erqi Station and West Erqi Subway Station, as well as Peace Gate Subway Station and Peace Gate, a distance between each two of these locations is less than 500 meters, and therefore, each two of these locations may be merged into one location and serve as the third location. For the West Erqi and the Mingkeyuan, West Erqi, a distance between the two locations is 858 meters and more than 500 meters, and therefore, these two locations may not be merged in this example.

Table 1

| Location Name | Address | Location Name | Address | Distance (meters) |
|---|---|---|---|---|
| West Gate, District 2, Longyueyuan | Wenhua Road, Changping District | West Gate, District 2, Longyueyuan | Longteng Street, Changping District | 343 |
| Yong Ding Men Dong Jie | Xicheng District, Beijing | Yong Ding Men Dong | | 322 |
| West Erqi | | Mingkeyuan, West Erqi | | 858 |

In some embodiments, when there is only one second location, the

| | | |
|---|---|---|
| Subway West Erqi Station | West Erqi Subway Station | 148 |
| Peace Gate Subway Station | Peace Gate | 4 |

third location may be a location whose number of appearances is relatively larger between the first location and the second location. For example, a number of appearances of a first location is eight times, a number of appearances of a second location is 26 times, and therefore the third location is the location of the second location. In some embodiments, when the number of the second location is more than one, the location of the third location may be a location of a center of the plurality of locations.

In some embodiments, the second ratio for the third location may be a sum of a second ratio for the first location and at least one second ratio for the second location. For example, the second ratio for the first location is 16%, and second ratios for three second locations are 10%, 27% and 15%; therefore the second ratio for the third location is 68% (16% + 10% + 27% + 15%).

Returning to FIG. 12, in step 1250, the processor 210 (e.g., the determination module 320 of the processor 210) may compare the second ratio for the third location with a third preset ratio to determine a frequently stayed location for the user. In some embodiments, the third preset ratio may be a number of ratio (e.g., 5%, 10%, 50%, 85%, etc.) set by the processor 210 according to the application scene. For example, the processor 210 may determine a location whose second ratio for the third location exceeds 50% as the frequently stayed location.

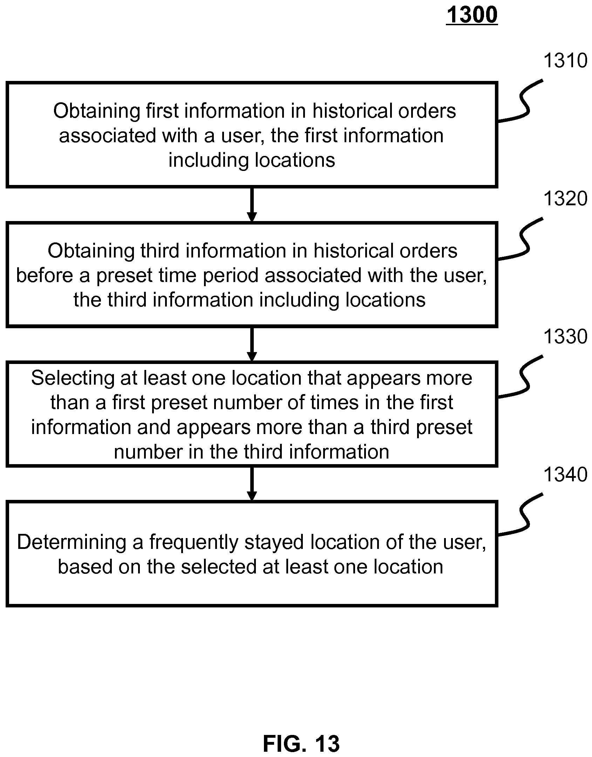

FIG. 13 is a flowchart illustrating an exemplary process 1300 for determining a frequently stayed location according to some embodiments of the present disclosure. The process 1300 may be applied to the transportation service system illustrated in FIG. 1. For example, the process may be stored in a non-transitory memory of the server 200 as a set of instructions and be invoked and executed by the processor 210.

In step 1310, the processor 210 (e.g., the acquisition module 310 of the processor 210) may obtain first information in historical orders associated with a user. In some embodiments, the historical orders of a user may be a collection of order information associated with the user within a preset time period (e.g., a year, six months, one month, ten days, one week, etc.). In some embodiments, the first information may include location information (e.g., a departure location, a destination, a positioning location, a geographic coordinate, a number of appearances of one or more locations associated with the user, etc.), time information (e.g., a departure time, an arrival time, an order duration, etc.), basic information of the user (e.g., a name, a gender, an age of the user, etc.), or the like, or any combination thereof. For example, the processor 210 may obtain the location information and the name of the user in historical orders associated with the user within three months and determine those as the first information.

In step 1320, the processor 210 (e.g., the acquisition module 310 of the processor 210) may obtain third information in historical orders associated with the user before a preset time period. In some embodiments, the third information may include location information (e.g., a departure location, a destination, a positioning location, a geographic coordinate, a number of appearances on one or more locations associated with the user, etc.), time information (e.g., a departure time, an arrival time, an order duration, etc.), basic information of the user (e.g., a name, a gender, an age of the user, etc.), or the like, or any combination thereof. In some embodiments, the historical orders before a preset time period may be historical orders associated with the user within a period of time before the preset time period. For example, when the preset time period is three months, historical orders associated with the user in a certain time period (e.g., a year, six months, three months, one month, ten days, one week, etc.) before three months are obtained.

In step 1330, the processor 210 (e.g., the selecting module 360 of the processor 210) may select at least one location that appears more than a first preset number of times in the first information, and appears more than a third preset number of times in the third information. In some embodiments, the third preset number of times may be a number of times (e.g., three times, five times, ten times, 20 times, 100 times, etc.) set by the processor 210 based on an application scene. For example, the processor 210 may select a location that appears more than five times in the first information and select a location that appears more than ten times in the third information.

In step 1340, the processor 210 (e.g., the determination module 320 of the processor 210) may determine a frequently stayed location of the user based on the at least one location selected in the first information and the third information. In some embodiments, the processor 210 may determine a location that appears more than a first preset number of times in the first information and appears more than a third preset number of times in the third information as the frequently stayed location. For example, the processor 210 may determine a location that appears more than five times in the first information and appears more than ten times in the third information as the frequently stayed location.

In some embodiments, the "first preset number of times", the "second preset number of times", and the "third preset number of times" disclosed in the present disclosure may be the same number of times, or different numbers of times. In some embodiments, the "first preset ratio", the "second preset ratio", and the "third preset ratio" disclosed in the present disclosure may be the same number of ratio, or different numbers of ratio.

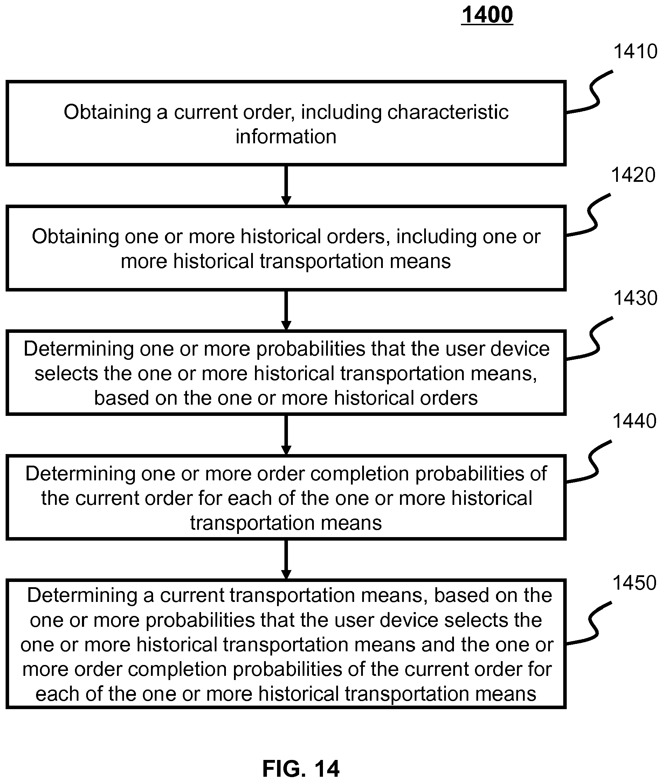

FIG. 14 is a flowchart illustrating an exemplary process 1400 for determining a transportation means according to some embodiments of the present disclosure. The process 1400 may be applied to the transportation service system illustrated in FIG. 1. For example, the process may be stored in a non-transitory memory of the server 200 as a set of instructions and be invoked and executed by the processor 210.

The network interface 230 of the server 110 may receive a current order transmitted by the user device 130 (e.g., a passenger device). The current order may include an intention of the user device 130 for requesting a service. The current order may be generated after some operations are performed by the user device 130. The operations may include starting a service application program, clicking or selecting an icon on an interface of the service application program, or performing an input operation on the interface of the service application program, etc. The current order may include one or more characteristic information. The characteristic information may include identity information, time information, location information, price information, or the like, or any combination thereof. The identity information may include an account name, a head portrait, a display name (nickname), a document (e.g., a driving licence, an ID card, etc.) number, a mobile phone number, a registration time, a user grade/level, a user rating, a user group (for example, classified according to an occupation, an education level, work experience, a social class and other attributes), an identification of the user device, or the like, or any combination thereof. The time information may include an ordering time, a time of departure, an estimated time of arrival, a driving time, an estimated fast driving time, an estimated slow driving time, an estimated waiting time, or the like, or any combination thereof. The location information may include a starting location (departure location) of an order, a termination location (destination) of an order, a get-on location, a get-off location, a location passed through, or the like, or any combination thereof. The price information may include additional tips, an accepted cost, a total cost, etc.

In step 1410, the processor 210 (e.g., the acquisition module 310 of the processor 210) may obtain a current order, and the current order may include characteristic information. In some embodiments, the characteristic information of a current order may include a linear distance (a linear distance, a road distance, a path, etc.) between a departure location and a destination of the current order, a number of orders within a preset range around an user equipment 130 corresponding to the current order, a number of driver devices corresponding to each transportation means within the preset range around the user equipment 130 corresponding to the current order, a third order completion amount and/or a third order completion ratio in a certain time period corresponding to each transportation means within the preset range around the user equipment 130 corresponding to the current order, a fourth number of orders within a certain range around the destination of the current order, a number of driver devices corresponding to each transportation means within the certain range around the destination of the current order. The preset range may be determined based on the number of orders and/or the number of driver devices around the location of the user device 130. The preset range may be a range of a distance threshold from the user equipment 130. In some embodiments, the distance threshold may be one kilometer, two kilometers, three kilometers, etc. It should be noted that the present embodiment is merely illustrative and does not limit the content of the characteristic information of the current order, and the characteristic information may be selected by a person skilled in the art according to a practical situation.

In step 1420, the processor 210 (e.g., the acquisition module 310 of the processor 210) may obtain the historical orders related to the user device 130. In some embodiments, the acquisition module 310 may obtain all or part of the historical orders related to the user device 130 within a preset time period. The preset time period may be a time period within a week, a month, a quarter, six months, one year or any other length of time before the current ordering time. For example, when the current ordering time is 8:00 am, the preset time period may be a time period from 8:00 am a week ago to the current time. In some embodiments, the acquisition module 310 may only obtain historical orders for working days within the preset time period. In some embodiments, the acquisition module 310 may only obtain historical orders for non-working days within the preset time period. In some embodiments, the acquisition module 310 may acquire all or part of historical orders for the working days within the preset time period, and/or all or part of historical orders for the non-working days within the preset time period. In some embodiments, the preset time period may be a specified time in a certain time period. For example, the acquisition module 310 may obtain historical orders from 6:00 am to 10:00 am for each working day in last month.

In step 1430, the determination module 320 of the processor 210 may determine one or more probabilities that the user device selects the one or more historical transportation means based on the one or more historical orders. Each of the one or more probabilities may refer to a ratio of a number of orders for a certain transportation means selected by the user (e.g., a passenger) to a number of all orders. For example, assuming that there are ten historical orders within the preset time period, in which numbers of orders for a taxi, a special car, an express and a hitch-hike are four, two, two and two, therefore, accordingly, a probability that the user selects a taxi may be 40%, a probability that the user selects a special car may be 20%, a probability that the user selects an express may be 20%, and a probability that the user selects a hitch-hike may be 20%. In some embodiments, the one or more probabilities that the user selects one or more historical transportation means may be directly determined based on transportation means in historical orders. In some embodiments, the one or more probabilities that the user selects one or more historical transportation means may be determined based on both order payment information of historical orders and a unit price corresponding to each transportation means. For example, if a historical order shows that a unit price per kilometer of the order is the same or close to the unit price per kilometer of a hitch-hike, the historical order may be a hitch-hike order. Unit prices corresponding to each transportation means may be fixed or changeable. The unit prices corresponding to each transportation means may be the same or different. The unit prices corresponding to each transportation means may be set by the system, or the user.

In step 1440, the processor 210 (e.g., the determination module 320 of the processor 210) may determine one or more order completion probabilities of the current order for each of the one or more historical transportation means based on the characteristic information of the current order. The order completion probability may refer to, within a preset time period, a ratio of a number of orders in which a certain service is selected and finally completed by the user to a number of orders for the service selected by the user, for example, a ratio of a number of completed orders for a transportation means associated with the user to a number of all orders for the transportation means. For example, assuming that there are ten historical orders within the preset time period, numbers of orders for a taxi, a special car, an express and a hitch-hike are four, two, two and two. Numbers of orders for a taxi, a special car, an express and a hitch-hike in the completed orders are three, one, two and one. An order completion probability for a taxi may be 75%, an order completion probability for a special car may be 50%, an order completion probability for an express may be 100%, and an order completion probability for a hitch-hike may be 50%. In some embodiments, the one or more order completion probabilities of the current order for each of one or more historical transportation means may be directly determined based on each order completion probability for each transportation means in the historical orders. In some embodiments, the processor 210 may determine a transportation means model based on the historical orders, and further determine the one or more order completion probabilities of the current order for each of one or more historical transportation means based on the characteristic information of the current order and the transportation means model. The transportation means model may include a relationship between the one or more order completion probabilities of the current order for each of one or more historical transportation means and the characteristic information of the order.

In step 1450, the processor 210 (e.g., the determination module 320 of the processor 210) may determine a current transportation means of the current order based on the one or more probabilities that the user device 130 selects the one or more historical transportation means and the one or more order completion probabilities of the current order for each of the one or more historical transportation means. In some embodiments, the processor 210 may calculate products of the one or more probabilities that the user device 130 selects one or more historical transportation means and the one or more order completion probabilities of the current order for each of one or more historical transportation means, and determine a transportation means with a relatively large product as the current transportation means of the current order. For example, the processor 210 may sort the transportation means based on the products, and determine transportation means with relatively large products as current transportation means. In some embodiments, the processor 210 may determine a transportation means with the maximum product as the current transportation means. In some embodiments, a determination unit of the processor 210 may further determine one or more conditional probability values for each transportation means that the user device 130 selects a transportation means under a condition that the current order is completed, and determine a transportation means with the maximum conditional probability value as the current transportation means of the current order.

In some embodiments, the process may further include other steps, for example, the server 110 may store the current transportation means after step 1450. Intermediate processing results and/or final processing results of the steps described above may be stored. The results may be stored in the database 130 or other modules or units with a storage function in the system. In some embodiments, the server 110 may push the order directly to one or more driver devices corresponding to the current transportation means determined by the processor 210. The driver devices may correspond to the current transportation means determined by the processor 210. In some embodiments, the server 110 may transmit the current transportation means determined by the processor 210 to the user device 130 (a passenger device). If the transportation means is accepted by the passenger, the server 110 may push the order to a driver device corresponding to the transportation means. If the transportation means is not accepted by the passenger, the server 110 may accept a transportation means selected by the passenger and push the order to a driver device corresponding to the transportation means selected by the passenger.

In some embodiments, some of the steps in the above-mentioned process, for example, step 1430 and step 1440, may be performed simultaneously. In some embodiments, some of the steps in the above-mentioned process may be exchanged in order. For example, step 1430 and step 1440 may be exchanged in order. The processor 210 may the determine the one or more order completion probabilities of the current order for each of one or more historical transportation means, and then determine the one or more probabilities that the user device selects one or more historical transportation means.

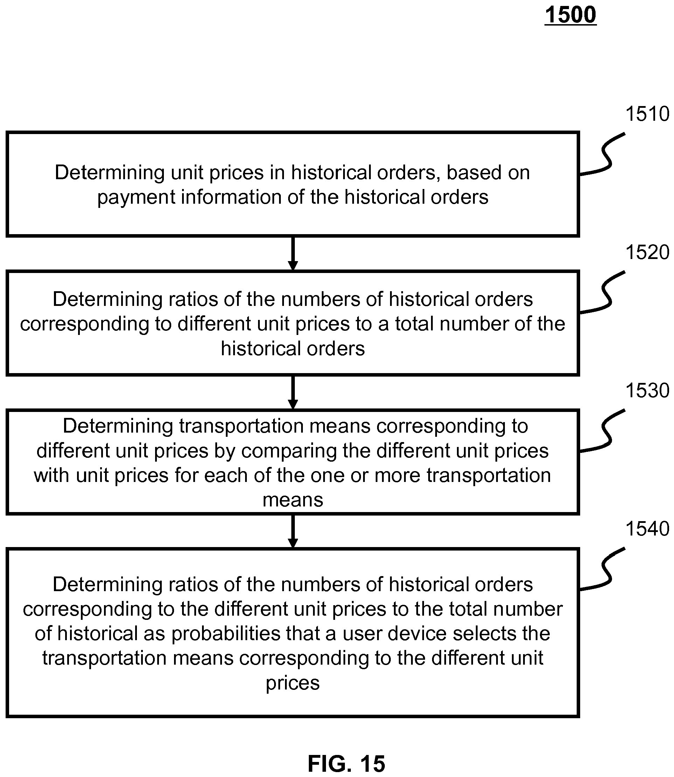

FIG. 15 is a flowchart illustrating an exemplary process for determining one or more probabilities that the user selects one or more transportation means according to some embodiments of the present disclosure. The process 1500 may be applied to the transportation service system illustrated in FIG. 1. For example, the process may be stored in a non-transitory memory of the server 200 as a set of instructions and be invoked and executed by the processor 210.

In step 1510, the processor 210 (e.g., the determination module 320 of the processor 210) may determine a unit price corresponding to each of the historical orders based on payment information of the historical orders obtained in step 1420. The payment information of historical orders may include a transportation means, a price displayed on a taximeter, a first price and a second price. The first price may be additional expenses paid by a user (for example, a passenger) to a driver, for example, tips or fuel costs. The second price may be expenses waived by the system or a driver from the payment of a passenger, such as discount coupons or vouchers. The unit price corresponding to each historical order may be a unit price per kilometer, or a unit price per mile.

In some embodiments, an acquisition model of the unit price in historical orders may be:

$$Pa = Price_1 \times \frac{P1 + P2 - P3}{P1} \qquad (1)$$

wherein, Pa is a unit price corresponding to each historical order, $Price_1$ is a preset unit price of a transportation means corresponding to the historical order, P1 is a price shown on a taximeter, P2 is the first price, and P3 is the second price.

In some embodiments, an acquisition model of the unit price in historical orders may be:

$$Pa = Price_2 \times \frac{P1 + P2 - P3}{P1} \qquad (2)$$

wherein, $Price_2$ is an optimized unit price of the transportation means corresponding to the historical order. A relationship between $Price_1$ and $Price_2$ may be arbitrary. In some embodiments, an acquisition model of the Price2 may be:

$$Price_2 = Price_1 \times \frac{P1 - P3}{P1} \qquad (3)$$

In step 1520, the processor 210 (e.g., the determination module 320 of the processor 210) may determine ratios of the numbers of historical orders corresponding to different unit prices to a total number of the historical orders. For example, assuming that there are 100 historical orders and there are 11 unit prices in the historical orders determined in step 1510, ratios F(Pa) of the numbers of historical orders corresponding to different unit prices obtained in step 1620 to the total number of historical orders are shown in Table 2.

Table 2

| Pa | 1.8 | 1.9 | 2 | 2.1 | 2.2 | 2.3 | 2.4 | 2.5 | 2.6 | 2.7 | 2.8 |
|---|---|---|---|---|---|---|---|---|---|---|---|
| F(Pa) | 5% | 7% | 5% | 6% | 8% | 14% | 16% | 20% | 16% | 1% | 2% |

In step 1530, the processor 210 (e.g., the determination module 320 of the processor 210) may compare the different unit prices and unit prices corresponding to each of the one or more transportation means to determine transportation means corresponding to different unit prices. For example, a corresponding preset unit price for the transportation means taxi is 2.5, and therefore the transportation means corresponding to Pa=2.5 in Table 2 is a taxi.

In step 1540, the processor 210 (e.g., the determination module 320 of the processor 210) may determine probabilities that a user device selects the transportation means corresponding to the different unit prices. In some embodiments, the determination module 320 of the processor 210 may determine ratios of the numbers of historical orders corresponding to different unit prices obtained in step 1620 to the total number of historical orders as the 1610. For example, the transportation means corresponding to Pa=2.5 in Table 2 is a taxi, and the ratio F(Pa)=20% corresponding to Pa=2.5 is the probability that a passenger selects a taxi as the transportation means.

In some embodiments, the process may further include other steps, for example, a storing step. Intermediate processing results and/or final processing results of the steps described above may be stored. The results may be stored in the database 130 or other modules or units with a storage function in the system. In some embodiments, some of the steps in the process may be performed simultaneously, for example, step 1530 and step 1540.

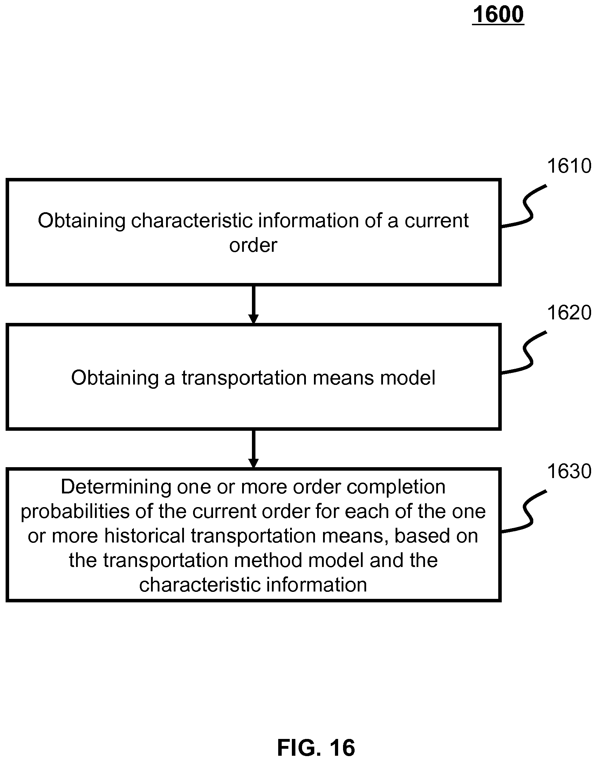

FIG. 16 is a flowchart illustrating an exemplary process 1600 for determining one or more order completion probabilities of the current order for one or more transportation means according to some embodiments of the present disclosure. The process 1600 may be applied to the transportation service system illustrated in FIG. 1. For example, the process may be stored in a non-transitory memory of the server 200 as a set of instructions and be invoked and executed by the processor 210.

The network interface 230 of the server 110 may receive a current order transmitted by the user device 130 (e.g., a passenger device). In step 1610, the processor 210 (e.g., the acquisition module 310 of the processor 210) may obtain the current order. The current order may include characteristic information. In some embodiments, the characteristic information of the current order may include a linear distance between a departure location and a destination of the current order, a number of orders within a preset range around the user equipment 130 corresponding to the current order, a number of driver devices corresponding to each transportation means within the preset range around the user equipment 130 corresponding to the current order, a third order completion amount and/or a third order completion ratio in a certain time period corresponding to each transportation means within the preset range around the user equipment 130 corresponding to the current order, a fourth number of orders within a certain range around the destination of the current order, a number of driver devices corresponding to each transportation means within the certain range around the destination of the current order, or the like, or any combination thereof. It should be noted that the present embodiment is merely illustrative and does not limit the content of the characteristic information of the current order, and the characteristic information may be selected by a person skilled in the art according to a practical situation.

In step 1620, the processor 210 (e.g., the acquisition module 310 of the processor 210) may obtain a transportation means model. The transportation means model may be obtained by training performed by the training module 340 of the processor 210. The transportation means model may take characteristic information related to orders of each transportation means within a preset time period as training data, and methods such as a linear regression model or a nonlinear regression model may be adopted. The linear regression model may be a simple linear regression model, a binary linear regression model, a multiple linear regression model, a logistic regression model, a support vector machine model, etc. The nonlinear regression model may be a simple non-linear regression model, a binary nonlinear regression model and a multiple nonlinear regression model, a neural network, a decision tree, a Markov chain, a Monte Carlo method, a variation method, etc. Training data may include one or more input and one or more output. The one or more input may include characteristic information related to an order. The one or more output may include one or more order completion probabilities of the current order for each of one or more historical transportation means.

In some embodiments, the transportation means model may already exist in the system. For example, the transportation means model may be stored in the database 140, the storage 220 or other units or modules with a storage function in the system. The processor 210 (e.g., the acquisition module 310 of the processor 210) may obtain the transportation means model from the database 140, the storage 220 or other units or modules with a storage function in the system. In some embodiments, when receiving the current order transmitted by the user device, the processor 210 may determine a transportation means model in real time based on the obtained historical orders.

In step 1630, the processor 210 (e.g., the determination module 320 of the processor 210) may determine one or more order completion probabilities of the current order for each of the one or more historical transportation means based on the transportation means model and the characteristic information of the current order.

In some embodiments, the process may further include other steps, for example, a storing step. Intermediate processing results and/or final processing results of the steps described above may be stored. The results may be stored in the database 130 or other modules or units with a storage function in the system. In some embodiments, multiple steps of the process may be combined into one step, for example, the step 1610 and the step 1620. The characteristic information of the current order and the transportation means model may be obtained in the same step. In some embodiments, steps of the process may be exchanged in order, for example, the step 1610 and the step 1620. The processor 210 may first obtain the transportation means model and then obtain the characteristic information of the current order.

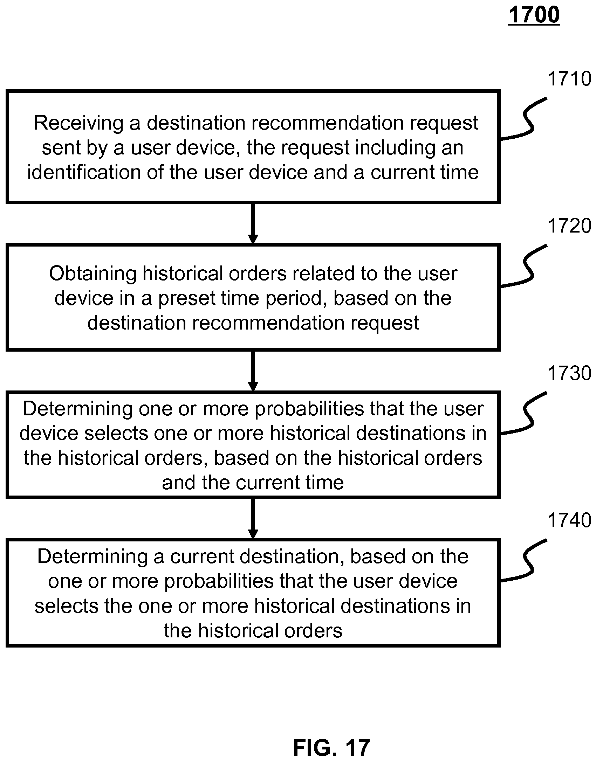

FIG. 17 is a flowchart illustrating an exemplary process 1700 for determining a recommended destination of the current order according to some embodiments of the present disclosure. The process 1700 may be applied to the transportation service system illustrated in FIG. 1. For example, the process may be stored in a non-transitory memory of the server 200 as a set of instructions and be invoked and executed by the processor 210.

In the present disclosure, a destination recommended to the user device may be referred to as a current destination. For example, for a car hailing service, when the user opens car hailing software to use the car hailing service, in some embodiments, the user may input information such as a departure location and a destination manually. In some embodiments, the server may recommend a destination to the user based on historical orders associated with the user, so as to eliminate a process of manually inputting by the user, and thereby improving user experience. The destination recommended to the user may be a historical destination, or a location different from the historical destination. In the present disclosure, the historical destination may refer to a destination appeared in historical orders.

In step 1710, the network interface 230 of the server 110 may receive a destination recommendation request transmitted by the user device 130 (e.g., a passenger device). The destination recommendation request may include an identification of the user device 130 and a current time. In some embodiments, the current time may refer to an opening time of the service application program (e.g., the car hailing software in the user device 130) in the user device. The identification of the user device may include an account name, a head portrait, a display name (nickname), a document (e.g., a driving licence, an ID card, etc.) number, a mobile phone number, or the like, or any combination thereof. In some embodiments, the destination recommendation request may exist in a form including, for example, opening a service application program, performing an operation on an icon in an interface of the service application program, and inputting or executing other operations set in the service application program on the interface of the service application program. In some embodiments, the user may set a destination recommendation service in the car hailing software, and when the user opens the car hailing software, a current destination determined by the server 110 may be received by the user device.

In step 1720, the processor 210 (e.g., the acquisition module 310 of the processor 210) may obtain historical orders related to the user device 130 within a preset time period. In some embodiments, the acquisition module 310 may extract historical orders associated with the user device 130 from the database 130. In some embodiments, the acquisition module 310 may obtain the historical orders associated with the user device 130. The historical orders may include a historical destination and a historical ordering time. Other information included in the historical orders may be similar to descriptions elsewhere in the present disclosure and will not be repeated here.

In some embodiments, the preset time period may be related to the current time. The preset time period may be a week, ten days, a month, a quarter, six months, one year or any other length of time before the current time. For example, if the current time is 8:00 am, the preset time period may be a time period from 8:00 am a week ago to the current time. In some embodiments, the acquisition module 310 may only obtain historical orders for working days within the preset time period. In some embodiments, the acquisition module 310 may only obtain historical orders for non-working days within the preset time period. In some embodiments, the acquisition module 310 may acquire all or part of the historical orders for the working days within the preset time period, and/or all or part of the historical orders for the non-working days within the preset time period. In some embodiments, the preset time period may not be related to the current time. In some embodiments, the preset time period may be a specified time in a certain time period. For example, the acquisition module 310 may obtain historical orders from 6:00 am to 10:00 am for each working day in last month.

Table 3

| Historical Ordering Time | Historical Destination |
|---|---|
| 12/10/2015 10:05 | Zhongguancun Software Park Gate 6 |
| 12/10/2015 15:58 | Zhongguancun Software Park Gate 6 |
| 12/10/2015 18:52 | Jinguyuan Building 1 |

(continued)

| Historical Ordering Time | Historical Destination |
|---|---|
| 12/11/2015 18:57 | Jinguyuan Building 1 |
| 12/11/2015 9:43 | Zhongguancun Software Park Gate 6 |
| 12/14/2015 10:05 | Zhongguancun Software Park Gate 6 |
| 12/14/2015 20:27 | Jinguyuan Building 1 |
| 12/14/2015 9:57 | Zhongguancun Software Park Gate 6 |
| 12/15/2015 18:02 | Jinguyuan Building 1 |
| 12/15/2015 19:00 | Zhichun Road |
| 12/15/2015 21:03 | Jinguyuan Building 1 |
| 12/15/2015 9:54 | Zhongguancun Software Park Gate 6 |
| 12/16/2015 19:18 | Jinguyuan Building 1 |
| 12/16/2015 9:56 | Zhongguancun Software Park Gate 6 |
| 12/17/2015 18:38 | Wudaokou Shopping Center |
| 12/17/2015 9:56 | Zhongguancun Software Park Gate 6 |
| 12/18/2015 18:11 | Jinguyuan Building 1 |
| 12/18/2015 22:30 | Capital Airport |
| 12/18/2015 8:41 | Zhongguancun Software Park Gate 6 |

Some examples of the historical orders are illustrated in Table 3. As illustrated in Table 3, the historical orders may include historical ordering times and historical destinations. The historical destinations may include Zhongguancun Software Park Gate 6, Jinguyuan Building 1, etc. The historical ordering time may include December 10, 2015, at 10:05 am, etc.

In step 1730, the processor 210 (e.g., the determination module 320 of the processor 210) may determine one or more probabilities that the user device 130 selects one or more historical destinations in the historical orders based on the obtained historical orders and current time. In some embodiments, the historical orders may be used to determine the one or more probabilities that the user device 130 selects one or more historical destinations in the historical orders. In some embodiments, the selecting module 360 may select the historical orders and choose some of the historical orders to determine the one or more probabilities that the user device 130 selects one or more historical destinations. In some embodiments, the historical orders may include a plurality of historical destinations, and the determination module 310 may calculate a ratio of a number of orders with the same historical destination to a number of all historical orders, and the ratio may be determined as the probability that the user device 130 selects the historical destination. In some embodiments, the processor 210 may determine a destination distribution model based on the historical orders. Further, the processor 210 (e.g., the determination module 320 of the processor 210) may determine one or more probabilities that the user device 130 selects different historical destinations based on the destination distribution model.

In step 1740, the processor 210 may determine a current destination based on the one or more probabilities that the user device 130 selects the one or more historical destinations in the historical orders. The number of the current destination may be one or more. In some embodiments, the transmission module 420 of the network interface 230 of the server 110 may further transmit the current destination to the user device 130. In some embodiments, the current destination may be all destinations in the historical orders. In some embodiments, the current destination may be displayed on a user interface of the service application program. In some embodiments, the current destination may be displayed on a first screen of the user interface, so that the user may see the current destination as long as the car hailing software is opened. In some embodiments, when the user clicks a region of information for a destination to be inputted, the current destination may be displayed. In some embodiments, the current destination may be displayed in a way including but is not limited to tabulation, map, destination mark, etc.

In some embodiments, the current destination may be some destinations in the historical orders. For example, the server 110 may transmit destinations with relatively large number of appearances or ratios to the user device 130, e.g., destinations with top 10, top 5, top 3, top 2 or the first number of appearances or ratio. In some embodiments, the server 110 may select a destination based on a preset threshold and display the destination in the destination recommendation on the first screen. For example, the current destinations transmitted by the server 110 may include A, B and C, in which probabilities of the A, B and C selected by the user device 130 are a, b and c, and assuming that a relationship between a threshold d preset in the user device and a, b and c is a<b<d<c, accordingly the destination C corresponding to c may be displayed in the destination recommendation on the first screen by the user device.

In some embodiments, the one or more probabilities that the user device selects one or more current destinations may be associated with the current destination and then transmitted to the user device 130 together. The current destination may be displayed on the first screen in a certain order. For example, the current destination may be displayed on the user interface of the user device 130 in a descending order, in an ascending order, or in a random order, depending on the corresponding probabilities or the numbers of appearances thereof.

When the current destination is received by the user device 130, the user may directly select an address as the destination if a destination desired by the user is included in the current destinations. If the destination desired by the user is not included in the current destination, the user may input a destination manually or modify conditions for generating the current destination, so that the server may regenerate current destination for the user to select.

In some embodiments, the process may further include other steps, for example, a storing step. Intermediate processing results and/or final processing results of the steps described above may be stored. The results may be stored in the database 140 or other modules or units with a storage function in the system. Other steps may be further added in the process, for example, the historical orders may be further selected after being obtained in the step 1720. Conditions for generating current destinations may be further added before the step 1740, for example, only five destinations may be selected and transmitted. In some embodiments, some of the steps in the process may be replaced by other methods. For example, the step 1730 of determining one or more probabilities that the user device selects one or more destinations in historical orders may not be necessary, and the server may generate the current destinations directly based on the numbers of appearances of the destinations in the historical orders.

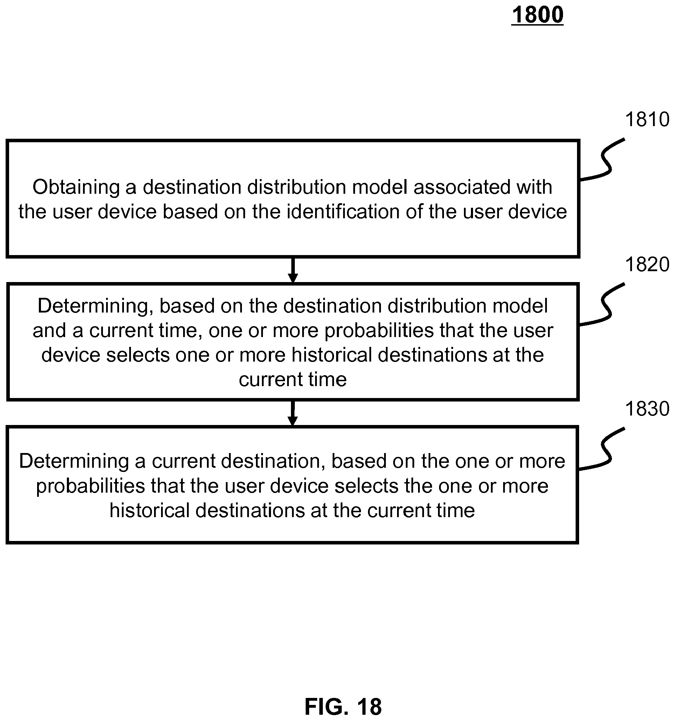

FIG. 18 is a flowchart illustrating an exemplary process 1800 for determining a current destination of the user device by the server according to some embodiments of the present disclosure.

In step 1810, the processor 210 may obtain a destination distribution model associated with the user device based on the identification of the user device. In some embodiments, the destination distribution model may be obtained from the database 140, the storage 220 or other units or modules with a storage function in the system.

In step 1820, the processor 210 may determine one or more probabilities that the user device selects one or more historical destinations based on the destination distribution model and the current time.

In step 1830, the processor 210 may determine a current destination based on the one or more probabilities that the user device selects the one or more historical destinations at the current time.

In some embodiments, the processor 210 may sort the one or more historical destinations based on the determined one or more probabilities that the user device selects the one or more historical destinations. In some embodiments, the processor 210 may determine one or more historical destinations with the highest probabilities as the current destination.

In some embodiments, the process may further include other steps, for example, a storing step. Intermediate processing results and/or final processing results of the steps described above may be stored. The results may be stored in the database 140 or other modules or units with a storage function in the system. In some embodiments, the server 110 may transmit the determined current destination to the user device 130 through the network interface 230. In some embodiments, the server 110 may further transmit the determined probability that the user device selects the current destination. In some embodiments, the server 110 may receive information from the user device 130. The received information may include a selection/confirmation/deny of the current destinations by the user device 130, a sorting of one or more current destinations by the user device 130, a feedback of non-recommendation information from the user device 130, etc. In some embodiments, a probability threshold for destinations recommended by the server 110 may be set in the user device 130. In some embodiments, when it is detected that probabilities for each destination transmitted by the server 110 of being selected are lower than the threshold set in the user device, the user device 130 may provide a feedback of non-recommendation information to the server. When receiving the non-recommendation information transmitted by the user device, the server 110 may adjust the number of appearances for selecting the historical orders, so that a probability that satisfies the requirement may exist in the probabilities for each destination information transmitted to the user device 130, and so as to avoid a situation that no recommended destination shows up.

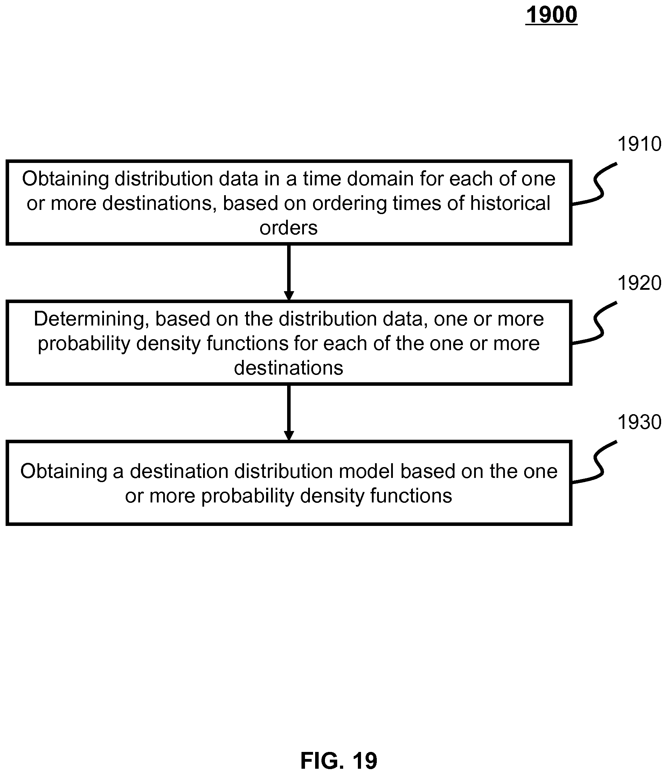

FIG. 19 is a flowchart illustrating an exemplary process 1900 for determining a destination distribution model by the server according to some embodiments of the present disclosure.

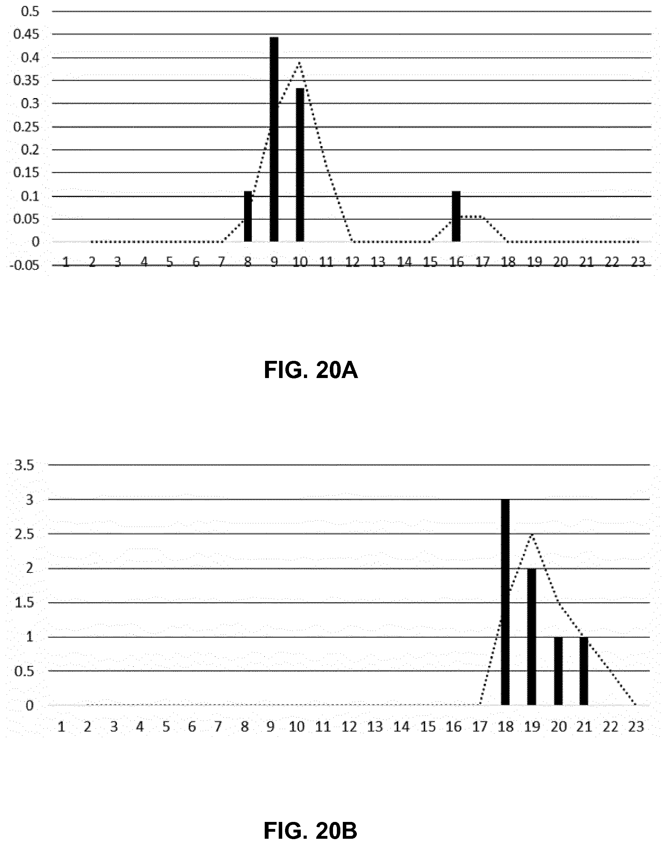

In step 1910, the processor 210 may obtain distribution data in a time domain for each of one or more destinations based on ordering times of the historical orders. In some embodiments, the distribution data may be in a form of histogram, etc. The distribution data of an exemplary destination is illustrated in FIG. 20A and FIG. 20B. FIG. 20A is distribution data taking Zhongguancun Software Park Gate 6 as the destination and obtained based on Table 3; FIG. 20B is distribution data taking Jinguyuan Building 1 as the destination and obtained based on Table 3. In FIG. 20A and FIG. 20B, the horizontal axis may represent ordering time distribution. In FIG. 20A, the vertical coordinate may represent the frequency of appearances of historical orders whose destination is Zhongguancun Software Park Gate 6. As can be seen from FIG. 20A, when Zhongguancun Software Park Gate 6 is the destination, ordering times of the user are concentrated between 9:00 and 10:00. In FIG. 20B, the vertical coordinate may represent the frequency of appearances of historical orders whose destination is Jinguyuan Building 1. As can be seen from FIG. 20B, when Jinguyuan Building 1 is the destination, ordering times of the user are concentrated between 18:00 and 21:00.

In step 1920, the processor 210 may determine one or more probability density functions for each of the one or more destinations based on the distribution data.

In some embodiments, the processor 210 may estimate the one or more probability density functions f(t) for the one or more historical destinations based on the distribution data in a time domain for each destination. The distribution of the destinations in a time domain may be a normal distribution, a Poisson distribution, an exponential distribution, a uniform distribution, etc. Assuming that an ordering time distribution T of the user to the same destination obeys the normal distribution, the processor 210 may calculate a mean value $\mu$ and a standard deviation $\sigma$ for the time distribution of the destination in the historical orders, and the normal distribution may be expressed as $N(\mu,\sigma^2)$. A probability density function f(t) of a historical destination which obey the normal distribution may be determined by a formula (4).

$$f(t) = \frac{1}{\sqrt{2\pi}\sigma} \exp\left(-\frac{(t-\mu)^2}{2\sigma^2}\right) \qquad (4)$$

In step 1930, the processor 210 may determine the destination distribution model based on the one or more probability density functions.

A time probability distribution function of a historical destination, as illustrated in formula (5), may be obtained based on the one or more probability density functions f(t) of the historical destinations.

$$F(T) = \frac{1}{\sqrt{2\pi}\sigma} \int_{-\infty}^{T} \exp\left(-\frac{(t-\mu)^2}{2\sigma^2}\right) \times dt \qquad (5)$$

Further, a probability $P(T|X_i)$ of a historical order including the historical destination (represented by Xi) being ordered at time T may be determined by a formula (6).

$$P(T|X_i) = F(T + \triangle t) - F(T - \triangle t) \qquad (6)$$

wherein $\Delta T$ may represent a small time window and a neighborhood centered at time T may be formed from T-$\Delta$T to T+$\Delta$T. Since T obeys the normal distribution $N(\mu,\sigma^2)$, $\frac{T-\mu}{\sigma}$ obeys the standard normal distribution N (0, 1).

$$F(T) = \emptyset\left(\frac{T-\mu}{\sigma}\right) - F(T - \Delta t) \qquad (7)$$

$$P(T|X_i) = \emptyset\left(\frac{T+\Delta t-\mu}{\sigma}\right) - \emptyset\left(\frac{T-\Delta t-\mu}{\sigma}\right) \qquad (8)$$

where $\emptyset(t) = \frac{1}{\sqrt{2\pi}} \exp\left(-\frac{t^2}{2}\right)$.

A destination distribution model may be obtained based on a formula (9),

$$P(X_i|T) \frac{P(T|X_i)\times P(X_i)}{\sum_{i=1}^{n}[P(T|X_i)\times P(X_i)]} \qquad (9)$$

wherein n≥1 may represent a number of destinations in the historical orders; T may be the current time; $X_i$ may represent the ith destination information in the historical orders; $P(X_i|T)$ may represent a probability that the user device 130 selects the $i^{th}$ destination at the current time; P ($X_i$) may represent a probability that the user device 130 selects the $i^{th}$ destination;

and $P(T|X_i) = \int_{T-\Delta t}^{T+\Delta t} f(t) \times dt.$

In some embodiments, before step 1910, the processor 210 may collect statistics on numbers of appearances for each destination in the historical orders; for example, accumulate historical orders with the same destination. A destination that appears more than or equal to a preset threshold of times may be selected based on different numbers of appearances for each destination as well as the preset threshold of times. In some embodiments, the preset threshold of times may be arbitrary, for example, ten times, five times, three times, etc. In some embodiments, the preset threshold of times may be preset based on a selected preset time period of the historical orders. The longer the preset time period is, the larger the preset threshold of times is; the shorter the preset time period is, the smaller the preset threshold of times is. It should be noted that the present embodiment is merely illustrative and does not limit the setting method of the preset threshold of times, and a person skilled in the art may select an appropriate preset threshold of times according to a practical situation.

In some embodiments, transportation data for some users may be sparse and not uniform. As illustrated in Table 3, in addition to two relatively concentrated destinations, other destinations may only appear once or twice, which may cause the standard deviation σ of the fitted normal distribution function extremely small. In some embodiments, a penalty factor $\min(1, \max(0.2, \frac{1}{\log_{10}(h)}))$ may be added to the standard deviation a, wherein h may be the number of appearances of historical destinations.

Further, theoretically, a range of the normal distribution is (-∞, +∞), but in fact, a probability in an interval (-3σ, +3σ) may already reach 0.999; therefore, a probability beyond the interval (-3σ, +3σ) may be set to a minimum value 0.0001.

In step 1920, when obtaining the one or more probability density functions for the one or more destinations, the processor 210 may process the distribution data obtained in step 1910. First, a date may be removed, only times in a day may be kept, and then a format of the times may be converted. For example, in Table 3, 9:30 may be converted into 9.5, and 22:30 may be converted into 22.5. Table 4 may be obtained after all times in Table 3 are converted. As can be seen from Table 4, in addition to individual noise points, the user places an order to go to the company (Zhongguancun Software Park) within a time period between 9:00 am and 10:00 am, and go back home (Jinguyuan) within a time period between 18:00 pm and 21:00 pm.

Table 4

| Destination | Time Distribution |
|---|---|
| Zhongguancun Software Park Gate 6 | 8.7, 9.7, 9.9, 9.9, 9.9, 10, 10.1, 10.1, 16 |
| Jinguyuan Building 1 | 18, 18.2, 18.9, 19, 19, 19.3, 20.5, 21.1 |
| Zhichun Road | 19 |
| Wudaokou Shopping Center | 18.6 |
| Capital Airport | 22.5 |

A statistical indicator may be adopted to quantify a compactness/sparseness of the time distribution and a frequency for each destination. The statistical indicator may include a mean value e, a standard deviation d, a frequency f, or the like, or any combination thereof.

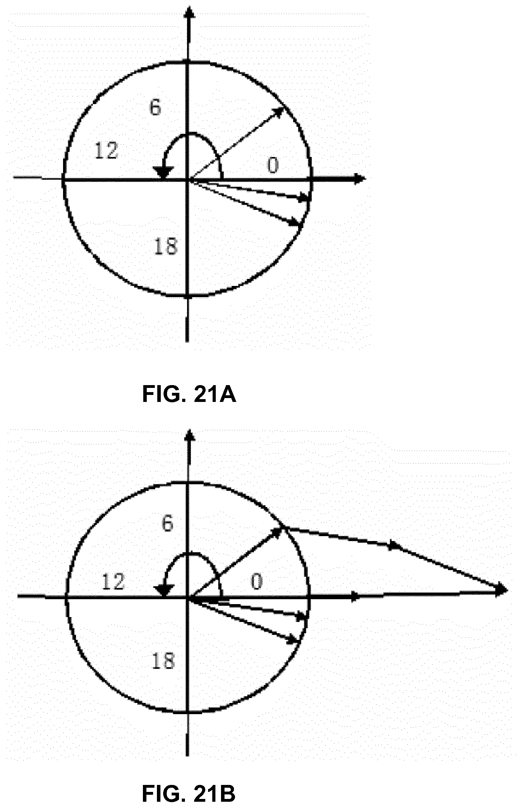

FIG. 21A and FIG. 21B illustrate the calculations of the mean value e. FIG 21A illustrates a schematic diagram of vectorized ordering times, and FIG 21B illustrates a schematic diagram of a vector conversion of the ordering times. The disk in FIG. 21A and FIG. 21B may represent a clock (from 0:00 to 23:59:59 in a day), the arc arrow may represent a clock direction, and the two coordinate axes represent x axis and y axis respectively. Times represented by the three vectors in FIG. 21A in counterclockwise order are: 3:00, 22:00 and 23:00. The three vectors are summed (an additive operation for vectors is shown in FIG. 21B) to get a sum vector. A time represented by a location of the sum vector on the disk may be an average time (for example, the mean value) of the three times. Therefore, an average time of 3:00, 22:00 and 23:00 may be 0:00, an average time of 8:00, 9:00 and 10:00 may be 9:00, and an average time of 23:00, 0:00 and 4:00 may be 1:00.

A mathematical method of finding a time corresponding to a sum vector of m vectors may be expressed as follows: a vector $t_k$ of the $k^{th}$ time may be expressed as (cos $\theta_k$, sin $\theta_k$), wherein $\theta_k = 2\pi \times \frac{t_k}{24}$, a sum vector of vectors corresponding to m times vectors may be expressed as $\theta = (\sum_{k=1}^{m} \cos \theta_k, \sum_{k=1}^{m} \sin \theta_k)$, then an angle

between the sum vector and the x-axis is $\cos^{-1} \dfrac{\sum_{k=1}^{m} \cos \theta_k}{\sqrt{(\sum_{k=1}^{m} \cos \theta_k)^2 + (\sum_{k=1}^{m} \sin \theta_k)^2}}$, and a time corresponding to $\theta$ is

$t = 24 \times \dfrac{\theta_k}{2\pi}$.

A time distribution and a distribution indictor of the data illustrated in Table 5 may be obtained based on the data in Table 3.

Table 5

| Destination | Time Distribution | Distribution Indictor |
|---|---|---|
| Zhongguancun Software Park Gate 6 | 8.7, 9.7, 9.9, 9.9, 9.9, 10, 10.1, 10.1, 16 | e=10.5, d=2, f=0.47 |
| Jinguyuan Building 1 | 18, 18.2, 18.9, 19, 19, 19.3, 20.5, 21.1 | e=19.3, d=0.96, f=0.47 |
| Zhichun Road | 19 | e=19, d=0, f=0.05 |
| Wudaokou shopping center | 18.6 | e=18.6, d=0, f=0.05 |
| Capital Airport | 22.5 | e=22.5, d=0, f=0.05 |

Assuming that a time T = 9:00, the following information may be obtained based on the time distribution of destination in Table 5:

P(T=9|X=Zhongguancun Software Park Gate 6)=0.3, P(X=Zhongguancun Software Park Gate 6)=0.47;
P(T=9|X=Jinguyuan Building 1)=0.05, P(X=Jinguyuan Building 1)=0.37;
P(T=9|X=Zhichun Road)=0.02, P(X=Zhichun Road)=0.05;
P(T=9|X=Wudaokou Shopping Center)=0.02, P(X=Wudaokou Shopping Center)=0.05; and
P(T=9|X=Capital Airport)=0.01, P(X=Capital Airport)=0.05.

The following information may be obtained based on the formula (9):

P(X=Zhongguancun Software Park Gate 6|T=9)=0.88125;
P(X=Jinguyuan Building 1|T=9)=0.115625;
P(X=Zhichun Road|T=9)=0.00625;
P(X=Wudaokou Shopping Center|T=9)=0.00625; and
P(X=Capital Airport|T=9)=0.003125.

In some embodiments, the server may transmit the obtained data to the user device. Assuming that the probability threshold set in the user device is 0.88, "Zhongguancun Software Park Gate 6" will be displayed in the destination recommendation on the screen.
In some embodiments, the process may further include other steps, for example, a storing step. Intermediate processing results and/or final processing results of the steps described above may be stored. The results may be stored in the database 130 or other modules or units with a storage function in the system.
Having thus described the basic concepts, it may be rather apparent to those skilled in the art after reading this detailed disclosure that the foregoing detailed disclosure is intended to be presented by way of example only and is not limiting. Various alterations, improvements, and modifications may occur and are intended to those skilled in the art, though not expressly stated herein. These alterations, improvements, and modifications are intended to be suggested by this disclosure, and are within the spirit and scope of the exemplary embodiments of this disclosure.
Moreover, certain terminology has been used to describe embodiments of the present disclosure. For example, the terms "one embodiment," "an embodiment," and/or "some embodiments" mean that a particular feature, structure or characteristic described in connection with the embodiment is included in at least one embodiment of the present disclosure. Therefore, it is emphasized and should be appreciated that two or more references to "an embodiment," "one embodiment," or "an alternative embodiment" in various portions of this specification are not necessarily all referring to the same embodiment. Furthermore, the particular features, structures or characteristics may be combined as suitable in one or more embodiments of the present disclosure.
Further, it will be appreciated by one skilled in the art, aspects of the present disclosure may be illustrated and described herein in any of a number of patentable classes or context including any new and useful process, machine, manufacture, or composition of matter, or any new and useful improvement thereof. Accordingly, aspects of the present disclosure may be implemented entirely hardware, entirely software (including firmware, resident software, micro-code, etc.) or combining software and hardware implementation that may all generally be referred to herein as a "block," "module," "engine," "unit," "component," or "system." Furthermore, aspects of the present disclosure may take the form of a computer program product embodied in one or more computer readable media having computer readable program code embodied thereon.

A computer readable signal medium may include a propagated data signal with computer readable program code embodied therein, for example, in baseband or as part of a carrier wave. Such a propagated signal may take any of a variety of forms, including electro-magnetic, optical, or the like, or any suitable combination thereof. A computer readable signal medium may be any computer readable medium that is not a computer readable storage medium and that may communicate, propagate, or transport a program for use by or in connection with an instruction execution system, apparatus, or device. Program code embodied on a computer readable signal medium may be transmitted using any appropriate medium, including wireless, wireline, optical fiber cable, RF, or the like, or any suitable combination of the foregoing.

Computer program code for carrying out operations for aspects of the present disclosure may be written in any combination of one or more programming languages, including an object oriented programming language such as Java, Scala, Smalltalk, Eiffel, JADE, Emerald, C++, C#, VB. NET, Python or the like, conventional procedural programming languages, such as the "C" programming language, Visual Basic, Fortran 1703, Perl, COBOL 1702, PHP, ABAP, dynamic programming languages such as Python, Ruby and Groovy, or other programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider) or in a cloud computing environment or offered as a service such as a software as a service (SaaS).

Furthermore, the recited order of processing elements or sequences, or the use of numbers, letters, or other designations, therefore, is not intended to limit the claimed processes and methods to any order except as may be specified in the claims. Although the above disclosure discusses through various examples what is currently considered to be a variety of useful embodiments of the disclosure, it is to be understood that such detail is solely for that purpose, and that the appended claims are not limited to the disclosed embodiments, but, on the contrary, are intended to cover modifications and equivalent arrangements that are within the spirit and scope of the disclosed embodiments. For example, although the implementation of various components described above may be embodied in a hardware device, it may also be implemented as a software-only solution-e.g., an installation on an existing server or mobile device.

Similarly, it should be appreciated that in the foregoing description of embodiments of the present disclosure, various features are sometimes grouped together in a single embodiment, figure, or description thereof for the purpose of streamlining the disclosure aiding in the understanding of one or more of the various embodiments. This method of disclosure, however, is not to be interpreted as reflecting an intention that the claimed subject matter requires more features than are expressly recited in each claim. Rather, claimed subject matter may lie in less than all features of a single foregoing disclosed embodiment.

In some embodiments, it is to be understood that, the numbers expressing quantities of ingredients, properties, and so forth, used to describe certain embodiments, are modified in some instances by the term "about," "approximate," or "substantially". Unless otherwise stated, "about," "approximate," or "substantially" may indicate ±20% variation of the value it describes. Accordingly, in some embodiments, numerical parameters set forth in the description and claims are approximations that may vary depending upon desired properties of a particular embodiment. In some embodiments, the numerical parameters may take a prescribed effective digit into account and adopt a general method to approximate the numerical parameters. Notwithstanding that the numerical ranges and parameters configured to illustrate the broad scope of some embodiments of the present disclosure are approximations, the numerical values in specific examples may be as accurate as possible within a practical scope.

Each patent, patent application, patent application publication and other materials cited herein, such as articles, books, instructions, publications, documents, articles, etc., are hereby incorporated by reference in their entirety. Application history documents that are inconsistent or conflicting with the contents of the present disclosure are excluded, and documents (currently or later attached to the present disclosure) that limit the widest range of the scope of the present disclosure are also excluded. It should be noted that if the description, definition, and/or terms used in the appended application of the present disclosure is inconsistent or conflicting with the content described in the present disclosure, the use of the description, definition and/or terms of the present disclosure shall prevail.

At last, it should be understood that the embodiments described in the present disclosure are merely illustrative of the principles of the embodiments of the present disclosure. Other modifications may be within the scope of the present disclosure. Accordingly, by way of example, and not limitation, alternative configurations of embodiments of the present disclosure may be considered to be consistent with the teachings of the present disclosure. Accordingly, embodiments of the present disclosure are not limited to the embodiments that are expressly introduced and described herein.

**Claims**

1. A system, comprising:

   a computer-readable storage medium storing a set of instructions; and
   a processor in communication with the computer-readable storage medium, wherein when executing the set of instructions, the processor is directed to:

      establish a connection with a user device;
      obtain a current order from the user device, wherein the current order includes a current time and a current location of the user device, the current order including an intention of the user device for requesting a service;
      determine a user profile associated with the user device; and
      determine information related to the current order based on the user profile and the current order.

2. The system of claim 1, wherein to determine the user profile, the processor is directed to:

      obtain scene information of the user device in one or more time periods;
      determine one or more semantic expressions of the user device of one or more common locations in the one or more periods based on the scene information;
      determine one or more frequencies that the user device appears in one or more scenes; and
      determine the user profile based on the one or more semantic expressions and the one or more frequencies.

3. The system of claim 2, wherein the user profile includes at least one of a transportation means model, a frequently stayed location, or a destination distribution model.

4. The system of claim 3, wherein to determine the frequently stayed location in the user profile, the processor is directed to:

      obtain first information in one or more historical orders that are associated with the user device, wherein the first information includes one or more locations;
      select, from the one or more locations in the first information, at least one location that appears more than a first preset number of times; and
      determine the frequently stayed location based on the selected at least one location.

5. The system of claim 3, wherein the information related to the current order includes a current destination or a current transportation means.

6. The system of claim 5, wherein the current order includes characteristic information, and wherein to determine the current transportation means, the processor is directed to:

      obtain one or more historical orders, wherein the one or more historical orders include one or more historical transportation means;
      for each of the one or more historical transportation means, determine a probability that the user device selects the historical transportation means based on the one or more historical orders;
      for each of the one or more historical transportation means, determine, based on the characteristic information, an order completion probability of the current order; and
      determine the current transportation means based on the one or more probabilities that the user device selects the one or more historical transportation means and the one or more order completion probabilities of the current order for each of the one or more historical transportation means.

7. The system of claim 5, wherein the current order includes an identification of the user device and wherein to determine the current destination, the processor is directed to:

obtain a destination distribution model associated with the user device based on the identification of the user device;

for each of one or more historical destinations, determine, based on the destination distribution model and the current time, a probability that the user device selects the historical destinations at the current time; and

determine the current destination based on the one or more probabilities that the user device selects the one or more historical destinations at the current time.

8. The system of claim 7, wherein relationships between the at least one of the one or more historical destinations and one or more historical ordering times satisfy normal distributions.

9. The system of claim 1, further comprising:
a transmission module, configured to transmit the information related to the current order to the user device.

10. The system of claim 9, further comprising:
a receiving module, configured to receive a confirmation of the information related to the current order from the user device.

11. A method, comprising:

establishing a connection between a server and a user device;

obtaining, by the server, a current order from the user device, wherein the current order includes a current time and a current location of the user device, the current order including an intention of the user device for requesting a service;

determining, by the server, a user profile associated with the user device; and

determining, by the server, information related to the current order based on the user profile and the current order.

12. The method of claim 11, wherein the determination of the user profile includes:

obtaining, by the server, scene information of the user device in one or more time periods;

determining, by the server, one or more semantic expressions of the user device of one or more common locations in the one or more periods based on the scene information;

determining, by the server, one or more frequencies that the user device appears in one or more scenes; and

determining, by the server, the user profile based on the one or more semantic expressions and the one or more frequencies.

13. The method of claim 12, wherein the user profile includes at least one of a transportation means model, a frequently stayed location, or a destination distribution model.

14. The method of claim 13, wherein the determination of the frequently stayed location in the user profile includes:

obtaining, by the server, first information in one or more historical orders that are associated with the user device, wherein the first information includes one or more locations;

selecting, by the server, from the one or more locations in the first information, at least one location that appears more than a first preset number of times; and

determining, by the server, the frequently stayed location based on the selected at least one location.

15. The method of claim 13, wherein the information related to the current order includes a current destination or a current transportation means.

16. The method of claim 15, wherein the current order includes characteristic information, and wherein the determination of the current transportation means includes:

obtaining, by the server, one or more historical orders, wherein the one or more historical orders include one or more historical transportation means;

for each of the one or more historical transportation means, determining, by the server, a probability that user device selects the historical transportation means based on the one or more historical orders;

for each of the one or more historical transportation means, determining, by the server, based on the characteristic information, an order completion probability of the current order; and

determining, by the server, the current transportation means based on the one or more probabilities of the user device selects the one or more historical transportation means and the one or more order completion probabilities of the current order for each of the one or more historical transportation means.

17. The method of claim 15, wherein the current order includes an identification of the user device and wherein the determination of the current destination includes:

obtaining, by the server, a destination distribution model associated with the user device based on the identification of the user device;

for each of one or more historical destinations, determining, by the server, based on the destination distribution model and the current time, a probability that the user device selects the historical destinations at the current time; and

determining, by the server, the current destination based on the one or more probabilities that the user device selects the one or more historical destinations at the current time.

18. The method of claim 17, wherein relationships between the at least one of the one or more historical destinations and one or more historical ordering times satisfy normal distributions.

19. The method of claim 11, further comprising:
transmitting, by the server, the information related to the current order to the user device.

20. The method of claim 19, further comprising:
receiving, by the server, a confirmation of the information related to the current order from the user device.

**100**

130

140

130-1

130-2

Database

130-3

120

130-4

110

**FIG. 1**

**200**

210

Processor

220

230

Storage

Network Interface

## FIG. 2

**300** 310

Acquisition Module

320

Determination Module

330

Prediction Module

340

Training Module

350

Generating Module

360

Selecting Module

FIG. 3

**400**   410   420

Receiving Module   Transmitting Module

**FIG. 4**

**500**

Obtaining a current order from a user device — 510

Determining a user profile associated with the user device — 520

Determining information related to the current order based on the user profile and the current order — 530

**FIG. 5**

**600** 610

Obtaining orders associated with a user device within a preset time period

620

Determining a user profile associated with the user device, based on the historical orders

**FIG. 6**

**700**

710

Obtaining scene information of the user device in one or more time periods within a preset time cycle

720

Determining one or more semantic expressions of the user device of one or more common locations in the one or more periods within the preset time cycle, based on the scene information

730

Determining one or more frequencies that the user device appears in one or more scenes in a preset time period

740

Determining a feature vector, based on the semantic expressions and the frequencies

750

Obtaining a user profile based on the feature vector

**FIG. 7**

**800**

830

810

Obtaining scene information of a user device in one or more time periods within 24 hours

Obtaining scene information of the user device within 3 months

820

840

Based on the scene information , obtaining semantic expressions of common locations, Vector1

Based on the scene information, obtaining a frequency of appearances in one or more scenes, Vector2

850

Determining a feature vector, based on the Vector1 and the Vector2

860

Obtaining a user profile based on the feature factor

**FIG. 8**

900

910

Obtaining first information in historical orders associated with a user, the first information including locations

920

Selecting at least one location that appears more than a first preset number of times in the first information

930

Determining a frequently stayed location of the user, based on the at least one location that appears more than a first preset number of times in the first information

**FIG. 9**

**1000**

1010

Obtaining first information in historical orders associated with a user, the first information including locations

1020

Deleting at least one location that appears less than a second preset number of times in the first information to obtain second information

1030

Determining one or more first ratios of a number of appearances of one or more locations in the second information to a total number of appearances of all locations in the second information

1040

Determining a frequently stayed location of the user by comparing the one or more first ratios with a first preset ratio

**FIG. 10**

**1100**

1110

Obtaining first information in historical orders associated with a user, the first information including locations

1120

Deleting at least one location that appears less than a second preset number of times in the first information to obtain second information

1130

Determining one or more first ratios of a number of appearances of one or more locations in the second information to a total number of appearances of all locations in the second information

1140

Determining time intervals of the appearances of one or more locations in the second information

1150

Determining one or more time correction coefficients for one or more locations, based on the time intervals

1160

Determining one or more second ratios for the one or more locations, based on the one or more first ratios and the one or more time correction coefficients

1170

Determining a frequently stayed location of the user by comparing the one or more second ratios with a second preset ratio

## FIG. 11

**1200**

1210

> Obtaining second information in historical orders associated with a user, the second information including a first location

1220

> Determining distances between the first location in the second information and other locations

1230

> Determining a second location, wherein the distance between the second location and the first location is smaller than a preset distance

1240

> Determining a third location and a second ratio for the third location based on the second location, the first location, a second ratio for the second location and a second ratio for the first location

1250

> Determining a frequently stayed location of the user by comparing the second ratio of the third location with a third preset ratio

**FIG. 12**

**1300**

1310

Obtaining first information in historical orders associated with a user, the first information including locations

1320

Obtaining third information in historical orders before a preset time period associated with the user, the third information including locations

1330

Selecting at least one location that appears more than a first preset number of times in the first information and appears more than a third preset number in the third information

1340

Determining a frequently stayed location of the user, based on the selected at least one location

**FIG. 13**

## 1400

1410

Obtaining a current order, including characteristic information

1420

Obtaining one or more historical orders, including one or more historical transportation means

1430

Determining one or more probabilities that the user device selects the one or more historical transportation means, based on the one or more historical orders

1440

Determining one or more order completion probabilities of the current order for each of the one or more historical transportation means

1450

Determining a current transportation means, based on the one or more probabilities that the user device selects the one or more historical transportation means and the one or more order completion probabilities of the current order for each of the one or more historical transportation means

**FIG. 14**

<u>1500</u>

1510

```
Determining unit prices in historical orders, based on
payment information of the historical orders
```

1520

```
Determining ratios of the numbers of historical orders
corresponding to different unit prices to a total number of the
historical orders
```

1530

```
Determining transportation means corresponding to
different unit prices by comparing the different unit prices
with unit prices for each of the one or more transportation
means
```

1540

```
Determining ratios of the numbers of historical orders
corresponding to the different unit prices to the total number
of historical as probabilities that a user device selects the
transportation means corresponding to the different unit
prices
```

**FIG. 15**

**1600**

Obtaining characteristic information of a current order — 1610

Obtaining a transportation means model — 1620

Determining one or more order completion probabilities of the current order for each of the one or more historical transportation means, based on the transportation method model and the characteristic information — 1630

**FIG. 16**

**1700**

1710

Receiving a destination recommendation request sent by a user device, the request including an identification of the user device and a current time

1720

Obtaining historical orders related to the user device in a preset time period, based on the destination recommendation request

1730

Determining one or more probabilities that the user device selects one or more historical destinations in the historical orders, based on the historical orders and the current time

1740

Determining a current destination, based on the one or more probabilities that the user device selects the one or more historical destinations in the historical orders

**FIG. 17**

1800

1810

Obtaining a destination distribution model associated with the user device based on the identification of the user device

1820

Determining, based on the destination distribution model and a current time, one or more probabilities that the user device selects one or more historical destinations at the current time

1830

Determining a current destination, based on the one or more probabilities that the user device selects the one or more historical destinations at the current time

FIG. 18

**1900**

Obtaining distribution data in a time domain for each of one or more destinations, based on ordering times of historical orders — 1910

Determining, based on the distribution data, one or more probability density functions for each of the one or more destinations — 1920

Obtaining a destination distribution model based on the one or more probability density functions — 1930

FIG. 19

FIG. 20A

FIG. 20B

**FIG. 21A**

**FIG. 21B**

# INTERNATIONAL SEARCH REPORT

| International application No. |
| --- |
| **PCT/CN2016/096222** |

## A. CLASSIFICATION OF SUBJECT MATTER

G06F 19/00 (2011.01) i

According to International Patent Classification (IPC) or to both national classification and IPC

## B. FIELDS SEARCHED

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT; CNKI; WPI; EPODOC: location, order, time, server

## C. DOCUMENTS CONSIDERED TO BE RELEVANT

| Category* | Citation of document, with indication, where appropriate, of the relevant passages | Relevant to claim No. |
| --- | --- | --- |
| Y | CN 103198653 A (HANGZHOU JIUSHU NETWORK SCIENCE & TECHNOLOGY CO., LTD.), 10 July 2013 (10.07.2013), claims 1-10 | 1, 9-11, 19, 20 |
| Y | CN 104463509 A (XIANFENG ZHIDAO (BEIJING) TECHNOLOGY CO., LTD.), 25 March 2015 (25.03.2015), claim 1 | 1, 9-11, 19, 20 |
| A | CN 104809527 A (HUAQIAO UNIVERSITY), 29 July 2015 (29.07.2015), the whole document | 1-20 |
| A | CN 104699792 A (BEIJING JINGDONG SHANGKE INFORMATION TECHNOLOGY CO., LTD.; BEIJING JINGDONG CENTURY TRADING CO., LTD.), 10 June 2015 (10.06.2015), the whole document | 1-20 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance: the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 02 November 2016 (02.11.2016) | **25 November 2016 (25.11.2016)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **MING, Mei** Telephone No.: (86-10) **62411851** |
| --- | --- |

Form PCT/ISA/210 (second sheet) (July 2009)

## INTERNATIONAL SEARCH REPORT
### Information on patent family members

| International application No. |
| --- |
| **PCT/CN2016/096222** |

| Patent Documents referred in the Report | Publication Date | Patent Family | Publication Date |
| --- | --- | --- | --- |
| CN 103198653 A | 10 July 2013 | None | |
| CN 104463509 A | 25 March 2015 | None | |
| CN 104809527 A | 29 July 2015 | None | |
| CN 104699792 A | 10 June 2015 | None | |

Form PCT/ISA/210 (patent family annex) (July 2009)

**REFERENCES CITED IN THE DESCRIPTION**

**Patent documents cited in the description**

- CN 201510516229
- CN 201610241057X
- CN 201610293450
- CN 201610340879